# FASCICULE DE BREVET EUROPEEN

(11) **EP 0 565 388 B1**
(45) Date de publication et mention de la délivrance du brevet: **12.03.1997**
(21) Numéro de dépôt: 93400034.0
(22) Date de dépôt: 08.01.1993
(51) Int. Cl.: B65D 25/10, B65B 61/22

(54) **Emballage récupérable pour conditionner et maintenir une charge**
Wiederverwendbare Verpackung mit Mitteln zum Festlegen des Inhalts
Reusable package with locating means for the contents

(30) Priorité: 10.04.1992 FR 9204437
(43) Date de publication de la demande: 13.10.1993
(73) Titulaire: SAVOYE N.S.A., F-21550 Ladoix Serrigny (FR)
(72) Inventeur: Ortmans, Thierry, F-21700 Nuits-Saint-Georges (FR)
(74) Mandataire: Cabinet Martinet & Lapoux

(56) Documents cités:
- FR-A- 2 361 282

## Description

La présente invention concerne d'une manière générale divers emballages, quels que soient la matière, la forme et l'agencement des éléments de base des emballages, tels que fond destiné à supporter une charge, et côtés ou parois encadrant la charge, et éventuellement moyen obturant l'ouverture de l'emballage en regard du fond. Un tel emballage est destiné à conditionner une charge composée de un ou plusieurs articles, tels que boîtes, flacons, documents ou produits alimentaires, préconditionnés ou non, regroupés ou mis unitairement au fond de l'emballage.

Plus précisément, l'invention a trait à un emballage au moyen duquel la charge est maintenue en place contre le fond afin que la charge demeure sensiblement immobile à l'intérieur de l'emballage lorsque celui-ci est manutentionné et transporté et est susceptible d'être soumis à des chocs, chutes, vibrations, inclinaisons et retournements. Le maintien de la charge revient pratiquement à assujettir la charge à l'emballage afin que la charge soit immobile et stable dans l'emballage.

La technique actuellement employée pour atteindre cet effet de maintien de charge consiste à appliquer la charge contre le fond au moyen de deux feuilles plastiques thermorétractables. Des premières bordures des feuilles sont liées, par exemple par collage,
soit à la face interne du fond et/ou aux faces internes des côtés de l'emballage, ou aux faces internes ou externes d'une ceinture interne à l'emballage (FR-A-2506722, EP-A-0151364, FR-A-2426620, FR-A-2564068, EP-B-0225208),
soit à des faces externes du fond su de rabats constituant le fond (GB-A-1321976, FR-A-2590548),
soit encore à des faces externes de côtés d'un manchon, appelé également étui ou ceinture, constituant l'élément principal de l'emballage, les premières bordures étant alors enserrées entre les côtés du manchon et des rabats d'un couvercle ou coiffe constituant le fond de l'emballage (EP-B-0225208, EP-B-0236173, FR-B-2604654).

Des secondes bordures des feuilles se chevauchent sur la charge et sont thermosoudées, et les feuilles sont thermorétractées afin d'appliquer la charge contre le fond et maintenir ainsi celle-ci immobile sur le fond. Dans certaines variantes, les deux feuilles peuvent être remplacées par une seule feuille.

De tels emballages à feuilles plastiques ne sont pas réutilisables et constituent des emballages perdus, puisqu'ils ne peuvent chacun servir qu'une seule fois pour conditionner la charge. En effet, pour retirer la charge du conditionnement, les feuilles doivent être déchirées ou découpées d'une part, et être bien souvent désolidarisées du fond ou des côtés de l'emballage en détériorant ceux-ci.

En outre, un tel emballage perdu est difficilement recyclable en raison de l'inhomogénéité des matières, carton et plastique, composant l'emballage.

Un autre type d'emballage divulgué par la FR-A-2 361 282 est une caisse de forme parallépipédique comprenant un fond destiné à supporter des bouteilles de vin couchées, en tant que charge. Deux faces intérieures de la caisse présentent des redans, c'est-à-dire des crémaillères, dans lesquels peut être forcé un élément de maintien formant couvercle. Les redans permettent de régler la position du couvercle suivant le degré de remplissage de la caisse.

La caisse est en matière plastique. Le couvercle est quasiment plat et renforcé par des nervures raidisseuses de façon à pouvoir assurer l'assise à un plus grand nombre de bouteilles. Pour ouvrir la caisse, il suffit de découper le couvercle le long des bords à l'endroit où des nervures raidisseuses sont arrêtées. La caisse n'est pas ainsi réutilisable.

L'objectif principal de l'invention est de fournir un emballage réutilisable dans lequel l'élément de maintien enveloppe et s'adapte à la surface de dessus de la charge, particulièrement lorsqu'elle présente une forme quelconque du fait qu'elle est constituée de produits hétérogènes, afin de maintenir efficacement la charge en place contre le fond de l'emballage pendant la manutention et le transport de l'emballage.

A cette fin, un emballage selon l'invention comprenant un fond destiné à supporter une charge, au moins deux côtés, des crémaillères solidaires des faces internes des côtés, et un élément de maintien ayant des portions de bord qui coopèrent avec des crans des crémaillères et une face interne qui est destinée à être appliquée contre la charge, est caractérisé en ce que l'élément de maintien comprend un cadre dont des portions de bord ou des bords coopèrent avec des crans de crémaillère, et un moyen plat élastique encadré par le cadre et assujetti au cadre.

Le moyen élastique peut être une feuille ou toile élastique, ou bien un treillis ou filet élastique de fils, bandelettes ou fibres et peut être assujetti au cadre par des bordures entretoisées dans le cadre.

L'élément de maintien est ainsi amovible de l'emballage afin de l'introduire dans l'emballage chargé pour conditionner une charge et de le retirer de l'emballage pour accéder à la charge après l'expédition et le transport de l'emballage. Ces deux opérations sont répétitives avec les mêmes emballage et élément de maintien pour conditionner et transporter diverses charges. Comme on le verra dans la suite de la description, la constitution et la forme des divers éléments de l'emballage peuvent être conditionnées par le type des charges à conditionner, par exemple leurs masse, encombrement et solidité, de manière à ne pas endommager aussi bien les éléments constitutifs de l'emballage que la charge elle-même au cours du conditionnement de la charge, du transport de l'emballage chargé et de l'ouverture de l'emballage pour accéder à la charge. En outre, lorsque l'emballage est recyclable, tous les éléments constitutifs de l'emballage sont fabriqués en une même matière telle que carton, métal, matière plastique, bois, etc...

Un emballage selon l'invention peut ainsi présenter l'une ou plusieurs des caractéristiques suivantes :
- les portions de bord et les crémaillères ont des profils sensiblement complémentaires ;
- le profil d'au moins l'une des portions de bord et le profil d'au moins l'une des crémaillères sont sensiblement triangulaires, trapézoïdaux, ronds ou rectangulaires ;
- la largeur d'au moins l'une des portions de bord est sensiblement égale à la largeur d'au moins l'une des crémaillères ;
- la largeur d'au moins l'une des portions de bords et/ou d'au moins l'une des crémaillères est sensiblement égale à la largeur des côtés ;
- au moins l'un des côtés comporte plusieurs crémaillères coopérant avec plusieurs portions de bord ;
- au moins l'une des portions de bord est en saillie ou dans une cavité le long d'un bord de l'élément de maintien, et au moins l'une des crémaillères est dans une cavité ou en saillie de la face interne de l'un des côtés de l'emballage ;
- au moins l'une des portions de bord coopère avec plus d'un cran de l'une des crémaillères ;
- la hauteur d'au moins l'une des crémaillères est inférieure à la hauteur du côté auquel elle est solidaire, et de préférence s'étend sur une portion de la face interne dudit côté éloignée dudit fond ;
- la hauteur de l'un des côtés de l'emballage, de préférence auquel est solidaire au moins l'une des crémaillères, est supérieure à la hauteur d'un autre côté de l'emballage ;
- au moins l'une des crémaillères est fixée à l'un des côtés de l'emballage, ou est intégrée à l'un des côtés de l'emballage de préférence par moulage, emboutissage ou refoulage ;
- au moins l'un des côtés est en carton ondulé ayant des cannelures sensiblement perpendiculaires au fond, au moins l'une des cannelures d'au moins la rangée de cannelures voisine de la face interne dudit côté possède des fentes, des portions de la cannelure entre les fentes ou entre les fentes d'une paire de fente sur deux sont au moins partiellement aplaties pour former une denture de l'une des crémaillères, et l'élément de maintien comprend au moins une partie saillante sur l'un de ses bords coopérant avec la crémaillère formée à partie de la cannelure.
- la face externe de l'élément de maintien comporte au moins une anse de préhension de préférence rabattable sur, ou rabattable et encastrable dans ladite face externe ;
- l'élément de maintien comporte au moins une lumière de préhension et/ou une fenêtre transparente ;
- au moins l'une des portions de bord et/ou au moins les crans d'au moins l'une des crémaillères sont enduits d'une matière sensiblement élastique ou sont caoutchoutés, ou sont en matière sensiblement élastique ;
- l'élément de maintien est au moins en partie en matière rigide ou semi-rigide, ou en matière élastique ;
- la face interne de l'élément de maintien est recouverte par un matelas souple de préférence en mousse ou matière caoutchouteuse ;
- l'emballage comprend trois, quatre ou plusieurs côtés dont au moins deux comportent chacun au moins une crémaillère ;
- le fond comporte des encoches complémentaires à des bords de côtés ;
- le contour de l'élément de maintien est sensiblement identique à celui de l'intérieur de l'emballage, de préférence l'élément de maintien ayant une épaisseur sensiblement uniforme et étant sensiblement rectangulaire, polygonal, ou circulaire ;
- le fond est monolithique avec les côtés de l'emballage, ou est constitué par au moins un rabat attenant à l'un des côtés de l'emballage ;
- le fond est constitué par un couvercle ayant des rabats liés aux races externes de côtés de l'emballage, et les côtés constituent un manchon ;
- l'emballage comprend un couvercle ou des rabats obturant l'ouverture de l'emballage en regard du fond.

L'invention concerne également un procédé pour conditionner une charge supportée par le fond d'un emballage selon l'invention. Le procédé est caractérisé par :
a) saisie de l'élément de maintien de manière à le présenter au-dessus de l'ouverture de l'emballage opposée au fond, avec des portions de bord sensiblement en prolongement des crémaillères,
b) introduction de l'élément de maintien saisi à l'intérieur de l'emballage par poussée exercée en direction de la charge sur des zones extrêmes d'un axe central du cadre d'élément de maintien afin que lesdites portions de bord franchissent successivement des crans des crémaillères, et
c) arrêt du déplacement de l'élément de maintien introduit et blocage de l'élément de maintien par rétention exercée par des crans des crémaillères sur les portions de bord lorsque la face interne de l'élément de maintien est forcée contre la charge.

Selon d'autres caractéristiques du procédé de conditionnement,
- pendant l'introduction, des poussées peuvent être réparties au moins sur les bordures de la face externe du cadre d'élément de maintien longées par les portions de bord, de manière à maintenir la face externe de l'élément de maintien avec une concavité sensiblement constante pendant ladite introduction ;
- après ledit arrêt, des poussées peuvent être réparties au moins sur les bordures de la face externe de l'élément de maintien longées par les portions de bord en direction du contour de la charge ;
- l'ouverture de l'emballage opposée au fond peut être obturée par un couvercle après le blocage de l'élément de maintien afin de fermer l'emballage.

L'invention a trait également à un dispositif pour conditionner une charge supportée par le fond d'un emballage conforme à l'invention. Ce dispositif est caractérisé en ce qu'il comprend :
- des moyens-supports supportant le fond de l'emballage;
- des moyens de préhension pour saisir l'élément de maintien ;
- des moyens de transport pour transporter les moyens de préhension au-dessus de l'ouverture de l'emballage opposée au fond afin que les portions de bord de l'élément de maintien soient sensiblement en prolongement des crémaillères, et
- des moyens pour déplacer l'un des moyens de préhension et des moyens-supports vers l'autre de manière à introduire l'élément de maintien dans l'emballage et l'appliquer contre la charge.

Selon des réalisations préférées du dispositif de conditionnement,
- les moyens-supports peuvent être une zone d'un transporteur d'emballage associée à des moyens pour arrêter momentanément l'emballage au moins pendant l'introduction de l'élément de maintien dans l'emballage, ou bien peuvent être un plateau latéral à un transporteur d'emballage associé à des moyens pour transférer l'emballage du transporteur vers le plateau avant l'introduction de l'élément de maintien dans l'emballage ;
- les moyens de préhension peuvent comprendre plusieurs ventouses pour saisir l'élément de maintien ;
- le dispositif peut comprendre un magasin contenant une pile d'éléments de maintien, ou un transporteur d'élément de maintien, duquel est saisi l'élément de maintien par les moyens de préhension ;
- les moyens pour déplacer peuvent comprendre des moyens transportables par les moyens de transport pour déplacer avec l'élément de maintien saisi les moyens de préhension à l'intérieur de la charge jusqu'à la charge immobile avec l'emballage, ou bien des premiers moyens pour déplacer les moyens-supports supportant le fond de l'emballage vers les moyens de préhension qui sont momentanément immobiles avec l'élément de maintien saisi jusqu'à ce que la charge soit appliquée contre la face interne de l'élément de maintien ;
- le dispositif peut comprendre des moyens pour obturer l'ouverture de l'emballage par un couvercle après l'application de l'élément de maintien contre la charge.

D'autres avantages de l'invention apparaîtront plus clairement à la lecture de la description suivante de plusieurs exemples préférés de réalisation de l'invention en référence aux dessins annexés correspondants dans lesquels :
- la figure 1 est une vue en perspective d'un emballage gerbable à deux côtés munis chacun d'une crémaillère et d'un élément de maintien à petits bords chanfreinés ;
- la figure 2 est une vue en coupe, prise le long de la ligne II-II de la figure 3, d'un emballage à deux côtés contre chacun desquels est rapportée une crémaillère à denture en dents de scie ;
- la figure 3 est une vue de dessus de l'emballage de la figure 2 ;
- la figure 4 est une vue en coupe prise le long de la ligne IV-IV de la figure 5, d'un emballage gerbable muni de plusieurs crémaillères à profil trapézoïdale rapporté sur les faces internes des côtés, d'un élément de maintien à épaisseur supérieure au pas de la denture des rainures et à anses rabattables, et d'une coiffe supérieure à quatre côtés ;
- la figure 5 est une vue en coupe prise le long de la ligne V-V de la figure 4 ;
- la figure 6 est une vue en coupe prise le long de la ligne VI-VI de la figure 7, d'un emballage du type barquette dont les faces internes des hauts côtés sont dotées de crémaillères intégrées à dentures sensiblement rondes et dans lequel est bloqué un élément de maintien à matelas sous-jacent et poignées encastrables ;
- la figure 7 est une vue en coupe prise le long de la ligne VII-VII de la figure 8 ;
- la figure 8 est une vue en perspective schématique d'une portion d'un côté d'un emballage en carton ondulé dans lequel sont ménagées deux crémaillères dans des cannelures ;
- la figure 9 est une vue en perspective d'un élément de maintien pour l'emballage de la figure 8 ;
- la figure 10 est une vue en coupe prise le long de la ligne brisée X-X de la figure 11, d'un emballage dont les parois constituent un manchon à section hexagonale, les faces internes de trois parois étant dotées de crémaillères à dentures carrées, et dont le fond est constitué par un couvercle, l'ouverture supérieure de l'emballage étant obturée par un autre couvercle, et dans lequel un élément de maintien est muni de lumières de préhension ;
- la figure 11 est une vue en coupe prise le long de la ligne XI-XI dans la figure 10 ;
- la figure 12 est une vue en perspective d'un élément de maintien selon l'invention comportant un cadre entourant un moyen plat élastique du type treillis ;
- la figure 13 est une vue en coupe transversale de l'élément de maintien de la figure 12, bloqué entre des crémaillères dans un emballage et enrobant une charge ;
- les figures 14 à 17 sont des vues de côté schématiques d'un emballage selon l'invention montrant différentes étapes du procédé de conditionnement selon l'invention respectivement ;
- la figure 18 est une vue schématique en perspective d'un premier dispositif de conditionnement selon l'invention au moyen duquel un élément de maintien est introduit dans un emballage chargé immobile ; et
- la figure 19 est une vue schématique en perspective d'un second dispositif de conditionnement selon l'invention au moyen duquel un emballage chargé est élevé vers un élément de maintien maintenu immobile, puis, selon une variante préférée, vers un couvercle destiné à obturer l'ouverture supérieure de l'emballage.

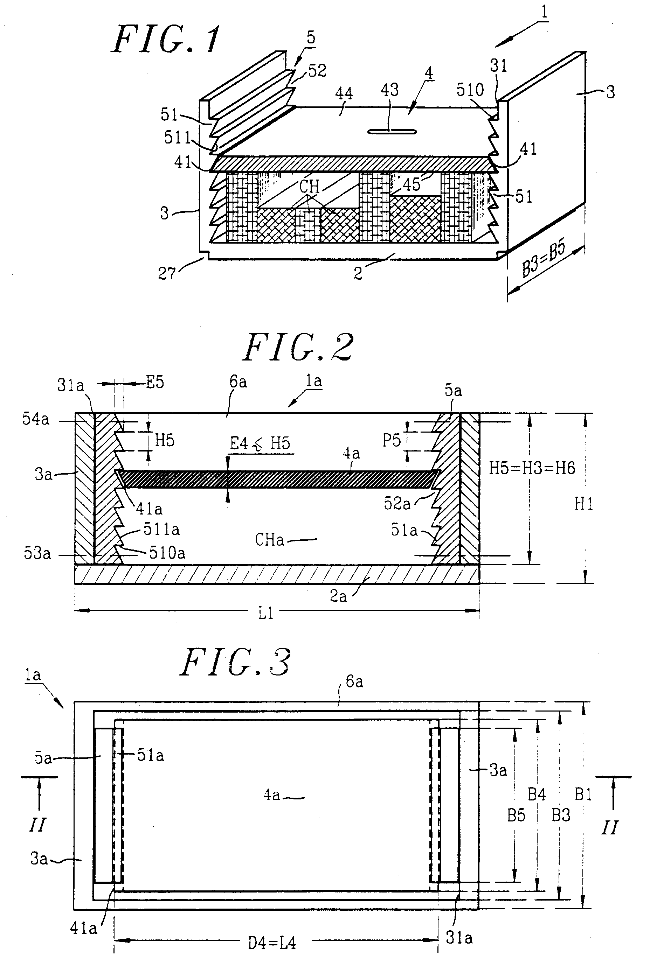

Comme montré à la figure 1, un emballage élémentaire 1 selon l'invention est analogue à un plateau-support et comprend essentiellement trois éléments qui sont inclus dans divers emballages connus, à savoir un fond 2 et deux côtés 3,3, par exemple sensiblement opposés, ayant des hauteurs égales ou différentes. La face interne du fond 2 est destinée à supporter une charge CH constituée par un ou plusieurs produits homogènes ou hétérogènes rangés ou en vrac. Les côtés opposés 3 sont dressés sensiblement perpendiculairement au fond 2 et sont sensiblement parallèles.

Selon l'invention, l'emballage 1 comprend également un élément de maintien de charge amovible en forme de panneau 4, et deux crémaillères 5,5 solidaires respectivement des faces internes 31,31 des parois 3,3. L'élément amovible 4 est destiné à maintenir la charge CH contre le fond 2 lorsque l'élément 4 est plaqué sur le dessus de la charge et a des bords opposés 41,41 retenus par des crans 51,51 des crémaillères 5,5 respectivement.

Un emballage ne comportant qu'une crémaillère n'a pas d'intérêt pour des emballages destinés à conditionner des charges ayant des volumes et dimensions différents.

Chacun des éléments 2 à 5 constituant l'emballage élémentaire 1, ainsi que des autres "éléments supplémentaires" d'un emballage selon l'invention, peuvent être en toute matière rigide ou semi-rigide identique ou analogue à l'une des matières suivantes : carton compact, carton ondulé par exemple simple, doublé ou triplé ; caoutchouc ou autre matière enduite de caoutchouc ; matière plastique moulée et/ou usinée, renforcée ou non de fibres de verre ou de carbone, partiellement ou totalement opaque, transparente ou translucide, telle que par exemple polychlorure de vinyle (PVC), polyéthylène, polyester, résine expoxydique, etc... ; métallique, par exemple aluminium, ou en alliage métallique ; bois. Les éléments de l'emballage peuvent être en la même matière lorsqu'il est entièrement recyclable, ou en des matières différentes.

Sachant qu'il existe une infinité d'emballages connus comprenant les éléments de fond 2 et de côtés 3(6), distincts par les formes, dimensions et profils d'emballage, et par les agencements, formes, dimensions et profils des éléments de l'emballage élémentaire et des éléments supplémentaires ainsi que par les liaisons entre les éléments, il est impossible de décrire et d'illustrer tous les emballages auxquels s'applique l'invention. A titre d'exemple non limitatif, le lecteur pourra se référer aux divers modèles d'emballage et aux diverses combinaisons possibles d'éléments de ces modèles d'emballage décrits et illustrés dans le "Code International par Caisses Carton" établi par la FEFCO et l'ASSCO, Décembre 1979, Paris ; dans la norme française "EMBALLAGES EN CARTON ; VOCABULAIRE", H13-000, juin 1961, éditée par l'AFNOR, Paris La Défense; dans l'Extrait "EMBALLAGES DE TRANSPORT" dans "TECHNIQUES DE L'INGENIEUR", pages A 1022-1/15 et A 1023-1/5, novembre 1984, Paris ; ainsi que dans divers et nombreux documents de brevet concernant des emballages notamment en carton ou matière plastique, par exemple ceux décrits dans les brevets cités dans le préambule de la présente description. Tous les emballages décrits et/ou illustrés dans les documents précités ou résultant de diverses combinaisons des éléments de ces emballages sont considérés comme contenus dans la présente description.

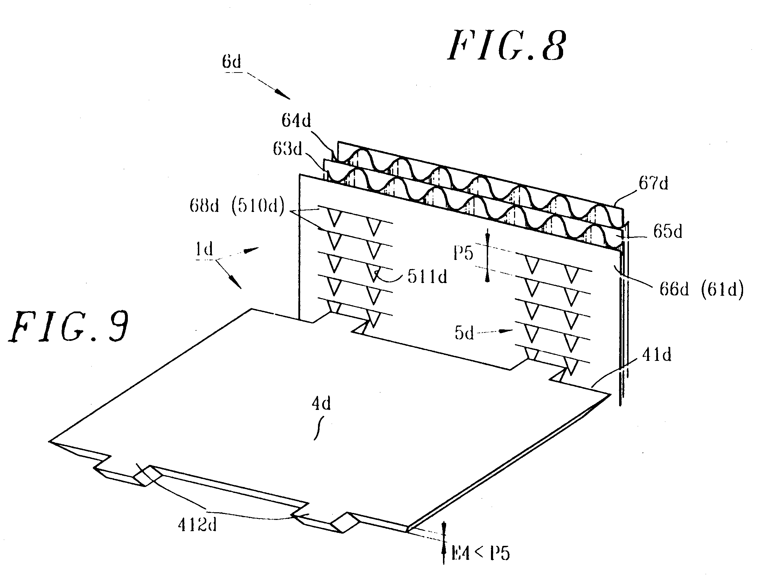

Ainsi à titre d'exemple non limitatif :
- le fond 2 peut présenter un contour triangulaire, rectangulaire, polygonal ou circulaire ou elliptique ; être composé d'un unique panneau, fixé aux côtés, attenant à au moins l'un des côtés ; être composé par deux, trois ou quatre rabats attenant aux côtés ; constituer par lui-même un couvercle inférieur (dit également coiffe) ayant des rabats fixés aux faces externes ou internes des côtés ; être conçu à partir d'une même pièce de matière, flan ou plaque, que les côtés par pliage, refoulage ; ou bien venir de moulage avec les côtés ; pour constituer un emballage par exemple du type caisse, bac ou plateau qui est ouvert, ou qui est fermé au-dessus de la charge par tout moyen supérieur de fermeture ou d'obturation tel que rabats, coiffe ou couvercle attenant ou non à au moins un côté, ou fixé par des rabats ou côtés à des côtés de l'emballage;
- chaque côté 3(6) de l'emballage peut être, comme l'élément de maintien 4, un panneau simple ou composite pouvant être perforé, ajouré, et/ou comporté, au moins une anse ou une lumière servant de poignée ; être attenant au fond formant la fermeture inférieure de l'emballage et/ou au couvercle de fermeture supérieure de l'emballage, ou fixé à un rabat du fond et/ou un rabat du couvercle ; avoir une ou des dimensions égales, supérieures ou inférieures à celles des autres côtés de l'emballage (barquette par exemple) et de rabats ou côtés attenant au fond ou couvercle supérieur, notamment en hauteur ; être constitué par une double paroi, par exemple composée d'un simple côté d'emballage et d'un élément de renfort accoté ou accolé à celui-ci, tel que rabat, élément de fixation rapporté, rembordement ou débord prolongeant un côté adjacent, côté d'un manchon ou étui en tant que doublure interne ou ceinture interne ; lorsque les côtés de l'emballage sont en carton ondulé, les cannelures du carton dans les côtés s'étendent de préférence verticalement, c'est-à-dire perpendiculairement au fond 2 de manière à accroître la résistance au gerbage de l'emballage, et donc s'étendent sensiblement perpendiculairement à l'élément de maintien 4, comme montré aux figures 8 et 9 ;
- les "éléments supplémentaires" de l'emballage peuvent être un côté, deux autres côtés opposés, ou plusieurs côtés sensiblement perpendiculaires au fond ; être un couvercle (coiffe) utilisé en tant que fermeture de l'ouverture supérieure de l'emballage ou en tant que suremballage du fond de l'emballage, ou des couvercles obturant des ouvertures latérales de l'emballage, tous ces couvercles pouvant posséder des rabats fixés sur des faces externes ou internes de l'emballage ou être constitués par une demi-caisse ouverte dont les côtés entourent partiellement ou totalement d'autres côtés et/ou faces supérieure et inférieure de l'emballage, comme pour une caisse télescopique ; être des enveloppes, manchons (étuis), ceintures, doublures, éléments de calage, éléments de renfort, éléments de compartiment, etc. ;
- les liaisons entre des éléments de l'emballage peuvent être effectuées par collage, thermocollage, soudure, agrafage, vissage, rivetage, cloutage, bande gommée, ou par ces procédés avec des pattes, cornières, débords ou prolongements d'éléments, ou être des liaisons venues de moulage, emboutissage, pliage, ou refoulage (rainage);
- l'emballage complet ou l'intérieur de celui-ci peut avoir une forme générale parallélélipédique, prismatique, polyédrique ou bien à bases (fond et ouverture supérieure et couvercle) circulaires ou elliptiques ; dans ce dernier cas, les "côtés" 3,3 de l'emballage sont considérés comme des "portions de côté" de la paroi de l'emballage cylindrique ou elliptique ; ainsi l'emballage peut comporter trois, quatre ou plusieurs côtés dont au moins deux comportent chacun au moins une crémaillère et constituer par exemple une caisse, une barquette, un plateau, un bac ou récipient ouvert ou fermé partiellement ou totalement en partie supérieure et/ou sur des côtés, présenter certains éléments ajourés et/ou partiellement ou totalement transparents, translucides, opaques ; avoir des côtés munis d'anses ou de lumières de préhension, d'entablements ou tenons pour couvercle ; etc...

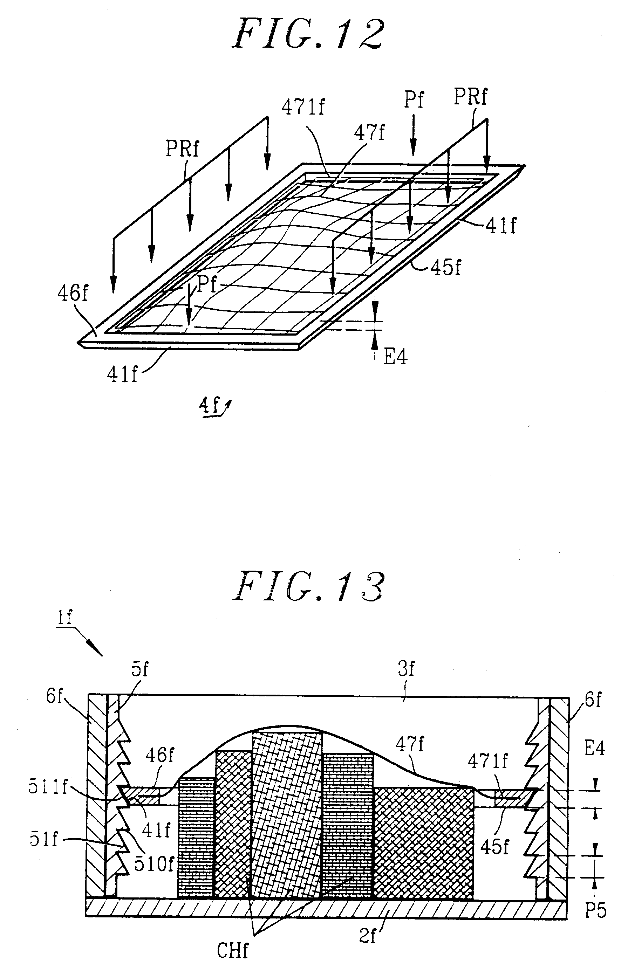

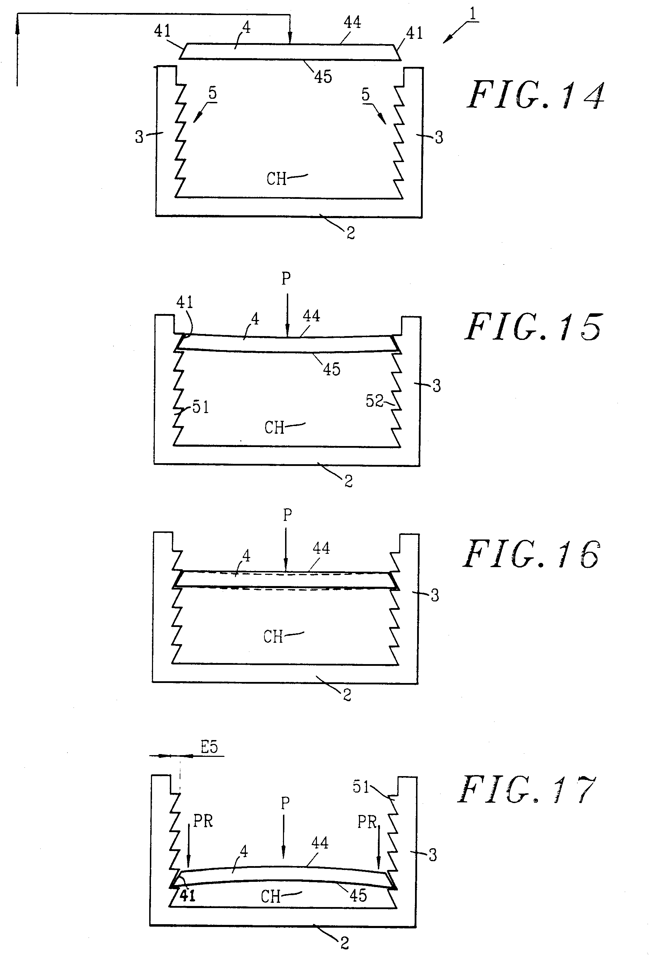

Diverses réalisations d'élément de maintien 4 et de crémaillère 5 sont maintenant décrites à titre d'exemple non limitatif. A des fins de simplification, les éléments de maintien dans les figures 1 à 11 et 14 à 19 sont illustrés par une plaque relativement rigide, bien que ces éléments de maintien ont une structure à cadre et moyen plat élastique selon l'invention, comme montré en détail aux figures 12 et 13. Des caractéristiques de ces divers éléments 4 et crémaillères 5 peuvent être combinées entre elles en fonction d'impératifs relatifs notamment à la conception, le coût et la résistance d'emballage, le poids et l'encombrement de la charge, et la destination de l'emballage orientée par exemple vers le transport, le stockage et/ou la présentation de la charge, et la réutilisation partielle ou totale ou la destruction après un nombre prédéterminé de chargements.

Dans les figures 1 à 13, relatives aux divers exemples de réalisation, des éléments d'emballage analogues sont désignés par des repères constitués par un même chiffre ou nombre et suivis respectivement par une lettre distinguant les réalisations a à f les unes des autres.

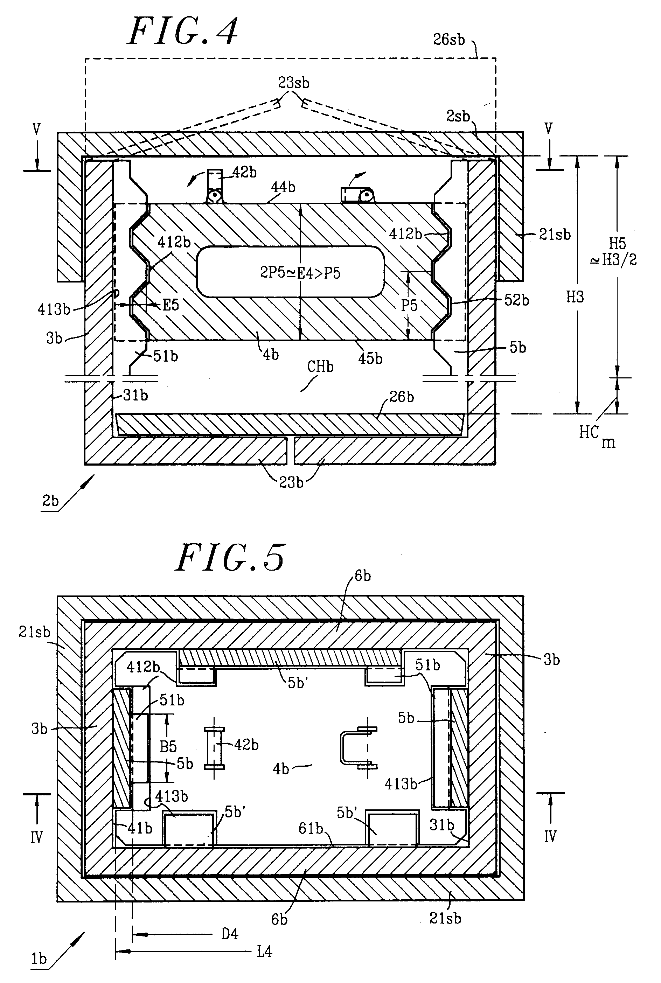

En référence aux figures 2 et 3, un emballage la comprend d'une manière connue un fond 2a supportant la charge, et deux paires de côtés parallèles 3a et 6a ayant ici des hauteurs égales H3=H6, de manière à former une caisse ou bac ouvert parallélipédique rectangle, bien qu'en variante la hauteur H3 des côtés 3a, 3a peut être supérieure à celle H6 des côtés 6a, 6a.

Selon les figures 2 et 3, deux crémaillères 5a, 5a avec des crans 51a et entailles 52a sont rapportées et fixées aux faces internes en regard 31a, 31a des côtés 3a au moyen de colle, ou soudure, ou par des vis, rivets, ou boulons indiqués schématiquement, au moins en parties inférieure 53a et supérieure 54a des crémaillères 5a. Selon la réalisation illustrée, les crémaillères 5a sont fixées aux petits côtés 3a de l'emballage, dénommés "têtes" de l'emballage situés aux extrémités de la longueur L1 de l'emballage. Selon une autre variante, les crémaillères peuvent être fixées aux grands côtés 6a de l'emballage, dénommés "faces" de l'emballage, situés aux extrémités de la largeur B1 de l'emballage. Les crémaillères 5a, 5a sont positionnées avec des crans 51a, 51a sensiblement deux à deux au même niveau et perpendiculairement au fond 2a et le long de lignes centrales verticales des faces internes 31a, 31a des côtés 3a, 3a.

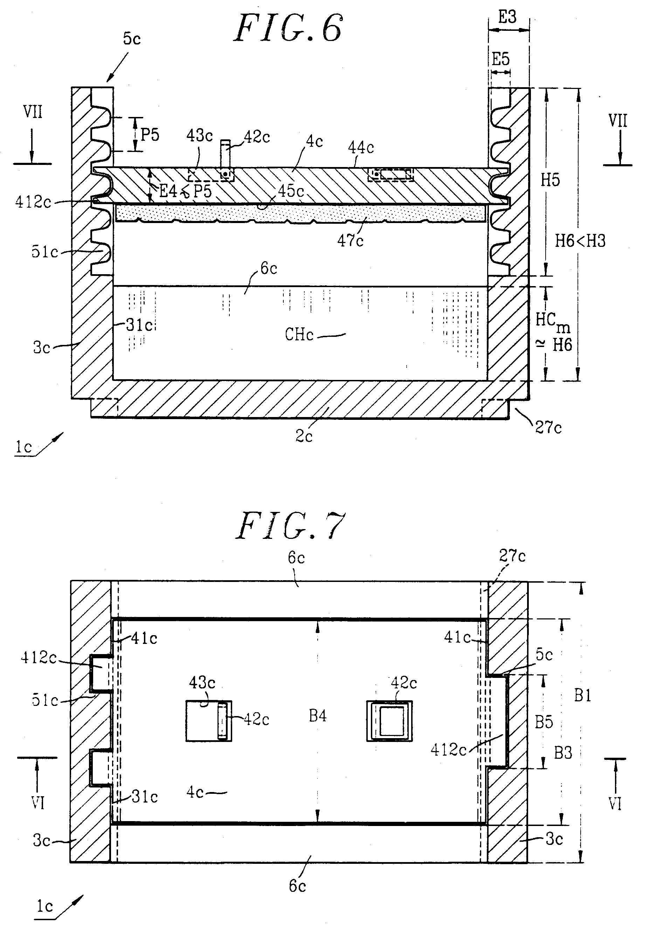

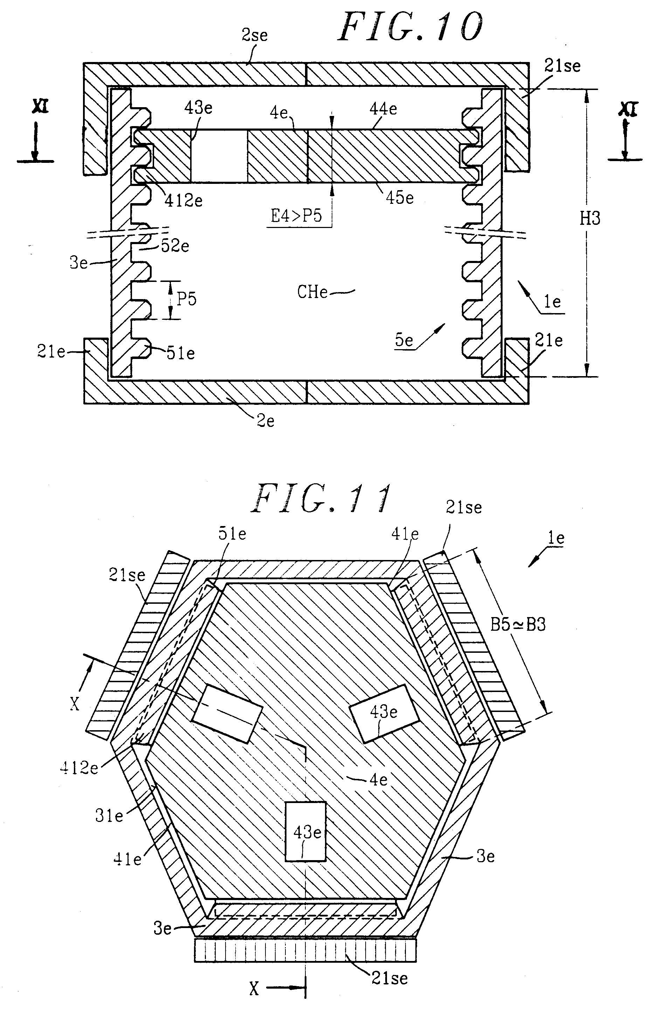

Chacune des crémaillères 5a est de préférence monolithique, et peut être obtenue par moulage et/ou usinage, ou par refoulage, emboutissage, ou découpe en ce qui concerne notamment les crans de celle-ci. Une crémaillère 5a comporte une portion en colonne dont une face est appliquée contre la face interne 31a du côté correspondant 3a, et dont la face opposée de la crémaillère est munie de crans 51a. La hauteur H5 de la crémaillère est égale à la hauteur H3 des faces internes des côtés 3a comme montré à la figure 2, ou bien peut être inférieure à H3 et supérieure à H3-HCₘ, lorsque les charges à conditionner ont toujours une hauteur supérieure à une hauteur minimale prédéterminée HCₘ. Dans cette dernière variante, comme montré aux figures 4 et 6, les crémaillères 5b, 5c sont situées en partie haute des côtés 3b, 3c et ont une hauteur sensiblement égale à H3 - HCₘ. La largeur B5 des crémaillères 5a est inférieure à la largeur B3 des faces internes des côtés 3a. Selon d'autres variantes, B3 peut être sensiblement égale à B5 comme montré à la figure 1 ou 11, ou deux ou plusieurs crémaillères 5 de largeurs égales ou différentes peuvent être fixées parallèlement entre elles à la face interne d'un côté 3, comme montré à la figure 5 ou 7, afin d'accroître l'effort de blocage de l'élément de maintien 4 par les crans des crémaillères 5,5 lorsque la masse de la charge est élevée.

Selon la réalisation illustrée à la figure 2, les crans 51a des crémaillères ont un profil vertical en triangle rectangle, la petite face 510a parallèle au fond 2a des crans étant orientée vers le fond 2a ; selon la variante montrée à la figure 1, les petites faces 510 des crans 51 sont orientées vers l'ouverture supérieure de l'emballage 1. Les faces inclinées 511a des crans 51a ou les petites faces 510 des crans 51 constituent des faces actives des crans dont deux en regard dans les crémaillères 5a, 5 sont destinées à supporter les portions de bord 41a, 41 (ou les bords) de l'élément de maintien 4a, 4 lorsque celui-ci est plaqué contre la charge CHa, CH. Les crans 51a forment des obstacles aux bords ou portions de bord 41a, 41 lors de l'introduction de l'élément 4a, 4 à l'intérieur de l'emballage.

Puisque les petites faces 510a des crans 51a sont en regard du fond 2a dans la figure 2, la poussée exercée vers le bas sur l'élément de maintien 4a lors de l'introduction de celui-ci à l'intérieur de l'emballage est nettement moins élevée que la traction qui doit être exercée vers le haut pour tenter de retirer l'élément de maintien introduit. Lorsque les crémaillères sont réalisées par exemple en carton comme on le verra par la suite en référence aux figures 8 et 9, celles-ci sont très endommagées et déchirées lors d'une tentative d'accès à la charge par retrait de l'élément de maintien. Un emballage comprenant ainsi des crémaillères selon le profil des crémaillères 5a présente un caractère d'inviolabilité. Au contraire, lorsque les petites faces 510 des crans de crémaillère 51 sont en regard de l'ouverture supérieure de l'emballage, à l'opposé du fond 2, comme montré à la figure 1, la traction exercée sur l'élément de maintien 4 lors d'une tentative de retrait est moins élevée que la poussée exercée sur l'élément de maintien lors de son introduction dans l'emballage. Un emballage comprenant des crémaillères selon le profil des crémaillères 5 autorise un retrait plus aisé de l'élément de maintien.

Le pas P5 de la denture des crémaillères 5a (ou 5) est égal à la hauteur H5 des crans dans la figure 2 (ou 1). L'épaisseur E5 des crans 51a, ou la profondeur des entailles 52a entre les crans, prise parallèlement aux côtés 3a, est choisie en fonction de la longueur L1 de l'emballage et plus précisément de la distance D4 entre les bords ou portions de bord 41a de l'élément 4a coopérant avec les crémaillères, et corollairement de la flexibilité propre de l'élément 4a, afin que les bords ou portions de bord 41a franchissent sans dommage les crans, et les entailles 52a entre deux crans adjacents dans les crémaillères assurent une retenue de l'élément 4a sous l'inertie de la charge. En particulier, la préservation des bords 41a contre l'usure par frottement peut être assurée par la constitution de l'élément 4a et/ou des crémaillères en une matière sensiblement élastique, telle que caoutchouc, ou par l'induction au moins des bords 41a et des crans de crémaillère 51a par une telle matière sensiblement élastique. La distance hors-tout D4 entre bords ou portions de bord de l'élément de maintien coopérant avec les crans est ainsi sensiblement égale à la distance entre les fonds de deux entailles 511a, 511a en regard des crémaillères 5a, 5a. Selon la réalisation illustrée à la figure 3, D4 est égale à la longueur hors-tout L4 de l'élément de maintien 4a.

Toutefois, selon une autre variante, montrée à la figure 5, lorsque les crémaillères saillent sur les faces internes 31b des côtés 3b, la longueur L4 de l'élément 4b est sensiblement égale à la longueur L3 (ou largeur B3) entre les faces internes des côtés supportant les crémaillères, et les bords 41b comportent des logements de cran en cavités 413b de profondeur et largeur qui sont sensiblement égales ou supérieures respectivement à l'épaisseur E5 (suivant L1) et à la largeur B5 des crans de crémaillères ; dans cette variante, les cavités 413b jouent le rôle de rainures par rapport aux crémaillères analogues à des languettes de guidage pour la pénétration de l'élément de maintien 4b à l'intérieur de l'emballage 1b. Les crans 412b et les cavités 413b de l'élément de maintien 4b constituent ainsi des portions de bord de l'élément de maintien coopérant avec les crans et entailles des crémaillères.

De préférence, les bords ou portions de bord 41, 41a coopérant avec les crans 51, 51a ont un profil complémentaire à celui des entailles 52a entre crans, qui est triangulaire en forme de simple chanfrein, ou biseau selon la figure 1 ou 2, ou qui peut être à double chanfrein. Cette complémentarité entre bords d'élément de maintien et entailles et/ou crans des crémaillères permet un encastrement idéal de l'élément de maintien entre les crémaillères et par conséquent un positionnement précis et une rétention parfaite de celui-ci.

L'épaisseur E4 de l'élément de maintien 4a peut être sensiblement uniforme et est conditionnée notamment en fonction du coût du matériau constituant l'élément 4a, des flexion et élasticité propres de ce matériau ainsi que de celles des côtés d'emballage 3a comportant les crémaillères, et aussi de la force de poussée exercée vers le haut par le poids de la charge particulièrement lorsque l'emballage sera retourné. Comme montré à la figure 1 ou 2, l'épaisseur E4 est inférieure ou sensiblement égale au pas P5 des crans. Selon d'autres variantes (figures 4 et 10), l'épaisseur E4 de l'élément de maintien 4b, 4e peut être supérieure à P5, et présenter des bords ou portions de bord 412b, 412e ayant un profil complémentaire à plusieurs crans et/ou entailles consécutifs des crémaillères. Par exemple, la figure 4 montre un élément de maintien 4b ayant une épaisseur E4 sensiblement égale à 2.P5 et comportant deux crans 412b sur chacun des bords coopérant avec deux entailles 52b de la crémaillère contiguë. Cette dernière variante accroît considérablement la résistance de l'élément de maintien 4b contre le poids de la charge qui peut être élevé, au prix d'un effort plus important pour introduire l'élément 4b dans l'emballage 1b.

Tout autre profil que triangulaire des crans de la crémaillère peut être sélectionné. Quelques uns de ces profils sont présentés ci-après à titre d'exemples non limitatifs, dans diverses réalisations non limitatives d'emballages selon l'invention.

Quel que soit le profil des crémaillères et des bords d'élément de maintien en particulier, les positions et formes des crémaillères, et les types d'élément de maintien de ces réalisations peuvent être combinés entre eux à l'intérieur des emballages de ces réalisations et d'autres emballages connus. Dans les diverses réalisations illustrées, les dimensions des divers éléments des emballages sont très relatives ; en particulier les dimensions des crémaillères et des éléments de maintien ont été agrandies pour clarifier les dessins.

Les figures 4 et 5 montrent un emballage 1b du type caisse américaine, ayant un fond 2b à quatre rabats 23b et 26b. Le fond 2b est composé de deux rabats internes se chevauchant 26b attenant par lignes de rainage aux grands côtés 6b de l'emballage 1b, et en contact avec la charge CHb, et de deux rabats externes sensiblement jointifs 23b attenant par lignes de rainage aux petits côtés 3b et recouvrant le dessous des rabats 26b. Les faces internes 31b des côtés 36 comportent chacune une crémaillère saillante 5b, et les faces internes 61b des côtés 6b comportent chacune deux crémaillères saillantes 5b', constituées en une ou deux pièces, dont les crans sont moins larges que ceux des crémaillères 5b. Dans la figure 5 ont été illustrées volontairement des crémaillères de largeurs différentes et ayant des sections différentes. Les crémaillères 5b sont collées ou agrafées aux côtés de l'emballage, et ont une hauteur H5 par exemple sensiblement égale à la demi-hauteur H3/2 des côtés. La denture des crémaillères 5b est trapézoïdale.

L'élément de maintien 4b dans l'emballage 1b a une épaisseur E5 sensiblement égale au double du pas P5 des dentures des crémaillères 5b Il comporte six portions de bord 412b chacune à deux crans trapézoïdaux coopérant respectivement avec les crans et entailles trapézoïdaux 51b et 52b des crémaillères 5b, 5b'. La face externe supérieure 44b de l'élément 4b comporte deux anses 42b rabattables sur la surface de cette face et destinées à être empoignées pour introduire manuellement l'élément 4b dans l'emballage 1b et à le retirer de celui-ci. L'ouverture supérieure de l'emballage 1b peut être fermée par des rabats 23sb et/ou 26sb articulés aux côtés 3b et /ou 6b, comme montré en traits interrompus dans la figure 4, ou bien par un rabat formant un couvercle attenant à l'un des côtés, et/ou par un couvercle amovible 2sb qui comporte des rabats ou côtés 21sb appliqués sur des bordures supérieures des côtés 3b et/ou 6b ou être constitué comme une demi-caisse pour recouvrir et suremballer partiellement ou totalement les côtés 3b et 6b.

Les figures 6 et 7 concernent un emballage 1c du type barquette dans lequel les côtés 3c ont une hauteur H3 supérieure à celle H6 des côtés 6b. Les côtés 3c comportent chacun deux crémaillères 5c comme montré à gauche dans la figure 7, ou une crémaillère 5c comme montré à droite dans la figure 7. Les crémaillères 5c sont complètement intégrées dans l'épaisseur E3 des côtés 3c, c'est-à-dire l'épaisseur E3 des côtés est supérieure à E5, ont une largeur B5 nettement inférieure à la largeur interne B3 des côtés 3c et s'étendent sur une portion verticale des côtés 3c de préférence inférieure à H3-H6 au-dessus des côtés 6c. Les autres côtés 6c ne comportent pas de crémaillère.

Le fond 2c, 2 des emballages 1c, 1 comporte des encoches 27c, 27 complémentaires des bords d'extrémité supérieure des côtés 3c, 3 afin de permettre un gerbage des emballages.

Chacune des crémaillères 5c est complètement intégrée dans la matière des côtés 3c, selon les figures 6 et 7, et peut être obtenue par moulage, usinage ou refoulage ou emboutissage. Elles présentent des dentures régulières dont les profils des crans 5c sont sensiblement ronds et ont en particulier deux flancs convexes et une extrémité arrondie.

L'élément de maintien 4c dans l'emballage 1c offre une épaisseur E4 sensiblement inférieure au pas P5 des dentures des crémaillères 5c, et deux bords latéraux opposés 41c dans chacun desquels sont ménagées deux saillies crantées 412c qui ont une largeur inférieure à la largeur B4 de l'élément 4c et qui présente une entaille (rainure) enveloppée de manière complémentaire par un cran de crémaillère 51c.

Dans un emballage 1c du type barquette, la largeur B4 peut être égale à celle B1 de l'emballage, et l'élément de maintien 4c peut comprendre deux côtés parallèles attenants destinés à entourer la charge au-dessus des côtés 6b et à recouvrir au moins partiellement les faces externes des côtés 6b, en étant fixés par exemple aux côtés 6b.

Comme montré à la figure 6, l'élément 4c comprend également deux anses de préhension 42c rabattables et encastrables dans des logements 43c pratiqués dans la face externe 44c de l'élément 4b, ainsi qu'un matelas 47c fixé contre la face inférieure interne 45c de l'élément 4c, par exemple par collage. Le matelas 47c est fait en une matière souple, par exemple en mousse de polyuréthane ou de polyamide ou en matière caoutchouteuse, telle que caoutchouc ou mousse de caoutchouc, de manière à venir en contact intime sensiblement avec toute la surface de dessus de la charge, particulièrement lorsqu'elle est irrégulière, et à améliorer le maintien de la charge CHc tout en la préservant grâce à l'amortissement du matelas lorsque la charge est fragile et l'emballage est soumis à des chocs.

Une autre variante d'une crémaillère 5d complètement intégrée dans un côté 6d (ou 3d) d'emballage 1d et en association avec l'élément de maintien correspondant 4d est montrée aux figures 8 et 9. Chacun des côtés 6d de l'emballage est en carton ondulé dit "double double", c'est-à-dire comportant deux rangées de cannelures 63d et 64d fixées de part et d'autre d'une feuille plane intérieure 65d, appelée "médiane", et respectivement contre des feuilles planes extérieures 66d et 67d, appelées "couvertures". La couverture 66d constitue la face interne 61d du côté 6d. Comme déjà dit pour un emballage en carton ondulé gerbable, les cannelures 63d et 64d s'étendent verticalement et perpendiculairement au fond de l'emballage.

Une ou plusieurs crémaillères parallèles 5d perpendiculaires au fond sont pratiquées dans le côté 6d de la manière suivante, afin d'obtenir un profil triangulaire de crémaillère analogue à celui des crémaillères 5a (figure 2) selon la réalisation illustrée à la figure 8. Des fentes minces 68d ayant une hauteur de préférence nettement inférieure au pas de crémaillère P5 sont découpées périodiquement le long d'un axe vertical et s'étendent chacune en largeur B5 par exemple sur une, ou deux selon la figure 8, ou plusieurs largeurs de cannelures internes voisines 63d, et à une profondeur E5 à partir de la couverture de face interne de côté 66d inférieure ou égale à l'épaisseur (distance entre creux et sommet) des cannelures 63d. Puis un poinçon à profil en dents de scie au pas P5 est appliqué contre la face interne 61d de la paroi 6d afin que les sommets des dents du poinçon pénètrent dans les fentes 68d et les dents du poinçon aplatissent les cannelures internes 63d derrière les fentes en des cannelures aplaties formant une crémaillère sensiblement à profil triangulaire selon le figure 8. Les fentes 68d forment ainsi les faces horizontales 510d des crans des crémaillères 5d.

Selon d'autres variantes, les portions de cannelures sont partiellement ou totalement aplaties entre les fentes d'une paire de fentes sur deux pour former des crans et encoches rectangulaires ou carrés de crémaillère.

Comme montré à la figure 9, l'élément de maintien 4d a une épaisseur E4 sensiblement inférieure à P5 et comprend sur chacun de ses bords 41d, ici longitudinaux, deux pattes rectangulaires saillantes en forme de crans 412b à chant chanfreiné orienté vers le bas et donc vers le fond de manière à coopérer avec deux crémaillères 5d d'un côté 6d. le couvercle 4d est de préférence également en carton ondulé.

Selon d'autres variantes, les cannelures 63d sont les cannelures internes d'un côté en carton ondulé simple ou double face, ou triple cannelure. Lorsque le côté comporte plusieurs cannelures superposées, les crémaillères peuvent être embouties dans l'épaisseur d'une ou plusieurs cannelures. Le profil des dentures de crémaillère peut être par exemple triangulaire, ou bien rectangulaire, carré trapézoïdal.

L'emballage le montré aux figures 10 et 11 comprend un manchon, appelé également étui ou ceinture ou tube, qui est à base polygonale et, selon la réalisation illustrée, à base hexagonale régulière, et qui comporte ainsi six côtés rectangulaires 3e. Le manchon est fermé en ouverture inférieure par un premier couvercle, appelé également coiffe, faisant office de fond 2e supportant la charge et ayant deux à six côtés ou rabats 21e, par exemple trois selon la figure 11, appliqués et fixés aux faces externes de trois côtés respectifs 3e. La hauteur des rabats ou côtés 21e peut être très petite, ou bien inférieure ou égale à la hauteur H3 du manchon, voire supérieure à celle-ci lorsque le manchon est une doublure d'emballage. L'ouverture supérieure du manchon peut être également fermée par un second couvercle 2se identique au couvercle 2e, ou ayant des rabats 21se de hauteur différente de celle des rabats du premier couvercle 2e, comme montré à la figure 10.

De préférence, afin que les contraintes auxquelles sont soumis les côtés lors de l'introduction de l'élément de maintien, soient transmises au fond 2e formant l'assise de l'emballage, les faces internes 31e des côtés 3e dont les faces externes sont liées à des rabats du fond en couvercle 2e, comportent chacune une crémaillère 5e, comme montré à la figure 11. Les trois crémaillères 5e s'étendent sensiblement sur toute la largeur interne B3 des côtés respectifs 3e et sont complètement intégrées dans la matière des côtés respectifs. La denture des crémaillères 3e est du type créneau, et comporte des crans 51e et entailles 52e à profil carré (ou rectangulaire). Les arêtes des crans carrés sont chanfreinés. Les faces internes des autres côtés 3e non liés à des rabats de fond 21e ne sont pas munies de crémaillère selon la figure 11, bien que selon d'autres variantes, elles peuvent en comporter.

L'élément de maintien de charge 4e dans l'emballage 1e a également un contour hexagonal et comporte, selon la réalisation des figures 10 et 11, trois bords ou chants plats en regard des faces internes 31e des côtés 3e ne comportant pas de crémaillère, et trois autres bords 41e coopérant avec les crémaillères 5e respectivement. L'épaisseur E4 de l'élément 4e est sensiblement égale à 1,5xP5, et chaque bord 41e comporte une rainure centrale parallèle aux faces 44e et 45e de l'élément 4e afin que le bord 41e ait un profil épousant de manière sensiblement complémentaire un cran 51e et deux entailles 52e contiguës audit cran. L'élément 4e peut comprendre une ou plusieurs lumières 43e pour passer les doigts de la main et ainsi faire office de moyen de préhension, notamment lors de l'introduction ou du retrait de l'élément 4e du manchon 3e. Selon une autre variante, certaines lumières 43e peuvent être remplacées par des fenêtres transparentes à travers lesquelles la charge est visible.

Selon l'invention, un élément de maintien 4f pour un emballage 1f ayant des crémaillères dont les profils sont par exemple triangulaires, comme ceux montrés à la figure 2, est représenté aux figures 12 et 13. L'élément de maintien 4f a son pourtour constitué par un cadre rigide ou semi-rigide 46f, par exemple rectangulaire en accord avec l'intérieur rectangulaire de l'emballage 11f, et comporte un moyen plat élastique 47f encadré par le cadre et assujetti au cadre.

Le cadre 46f a une épaisseur E4 par exemple sensiblement égale au pas P5 des crans 51f des crémaillères 5f dans l'emballage 1f. La section générale des traverses et longerons du cadre peut être carrée ou rectangulaire. Toutefois, la largeur de ces traverses et longerons est de préférence choisie relativement faible afin que le moyen élastique s'étende le plus possible sur la charge CHf. Les longerons ou les traverses présentent des bords chanfreinés 41f respectivement lorsque les faces internes des grands côtés 6f ou les petits côtés 3f de l'emballage 1f comportant chacun au moins une crémaillère comme montré à la figure 13. Selon l'exemple illustré à la figure 12, les quatre côtés du cadre sont biseautés en chanfreins 41f orientés vers le fond, et par conséquent l'élément 4f peut coopérer avec les crans de crémaillères sur les faces internes de tous les côtés de l'emballage.

Le moyen plat élastique 47f peut être une feuille ou toile élastique, partiellement ou totalement transparente ou opaque, ou bien un treillis ou filet élastique de fils, bandelettes ou fibres par exemple en résine de polyamide ou analogue. Le moyen élastique 47f est tendu à l'intérieur du cadre et offre au moins deux bordures opposées 471f assujetties par exemple par collage de préférence sur la face inférieure 45f du cadre, ou bien entretoisées dans les longerons et/ou traverses du cadre lors de sa fabrication. Lorsque le moyen plat élastique est sous la forme d'un treillis, les dimensions des mailles du treillis sont choisies de sorte qu'elles soient assez petites vis-à-vis des dimensions des produits constituant la charge CHf afin qu'aucun produit ne puisse traverser le moyen élastique 47f même lorsque celui-ci est plaqué contre la charge.

En effet, comparativement aux autres éléments de maintien 4, 4a à 4e décrits précédemment, l'élément de maintien 4f autorise avantageusement un enrobage complet du dessus de la charge CHf lorsque la surface de celle-ci est particulièrement convexe, comme montré à la figure 13, et donc un maintien plus efficace de la charge CHf contre le fond 2f de l'emballage lors de son transport ou toute autre manutention. Lorsque le cadre 46f est descendu à l'intérieur de l'emballage pour être bloqué entre des crans 51f des crémaillères 5f, sensiblement contre le pourtour de la charge CHf, le moyen élastique 47f est progressivement distendu au contact du dessus de la charge et enveloppe ainsi le dessus de la charge, quelles que soient ses discontinuités.

L'élément de maintien 4f constitue ainsi un moyen de maintien et de blocage de charge qui est récupérable et adaptable à de nombreuses formes de charge.

Chacun des emballages décrits en détail ci-dessus et d'autres emballages selon l'invention déduits des combinaisons des caractéristiques de l'élément de maintien 4f selon l'invention et des crémaillères 5, 5a à 5f et des caractéristiques des éléments de maintien 4, 4a à 4e avec des emballages tels que ceux illustrés dans la présente demande de brevet ou décrits et/ou illustrés dans les documents précités, autorise, après la pose de la charge sur le fond de l'emballage qui est ouvert au moins en partie supérieure et dont les côtés comportant des crémaillères sont déjà dressés perpendiculairement au fond, l'introduction de l'élément de maintien entre les côtés et à l'intérieur de l'emballage et le blocage de l'élément de maintien par les crémaillères afin de maintenir en place la charge sur le fond.

Un dispositif décrit ci-après pour conditionner une charge au moyen d'un emballage selon l'invention, par exemple tel que l'emballage 1, accomplit les étapes de procédé suivantes illustrées aux figures 14 à 17 :
a) Saisie de l'élément de maintien 4 (figure 14) pour le positionner au-dessus de l'ouverture supérieure de l'emballage 1 opposée au fond, sensiblement perpendiculairement aux faces internes 31 des côtés 3 comportant les crémaillères 5, et avec des bords 41 ou portions de bord 412 crénelés sensiblement dans le prolongement des crémaillères 5.
b) Introduction de l'élément de maintien 4 à l'intérieur de l'emballage (figure 15), parallèlement aux crémaillères 3, par poussée P dirigée vers la charge CH et exercée sur la face externe 44 supérieure de l'élément 4. Afin que les bords 41 ou portions de bord 412 de l'élément 4 franchissent successivement des crans supérieurs 51 des crémaillères, par friction sans endommagement des crémaillères et des bords, la poussée P est répartie en poussées PR puisque l'élément de maintien 4f selon l'invention présente comme armature un cadre 46f, comme montré à la figure 12. La poussée P est exercée sur des zones extrêmes d'un axe central de l'élément 4f, telles que le milieu des traverses ou des longerons du cadre, et des poussées réparties PR sont exercées sur les longerons ou sur les traverses respectivement, ou bien sur l'ensemble du cadre ; un exemple de répartitions de poussées P et PR est indiqué par des flèches respectives Pf et PRf dans la figure 12.
c) Arrêt du déplacement et blocage de l'élément de maintien 4 par la rétention exercée par des crans 51 des crémaillères, sensiblement localisés au niveau du dessus de la charge CH, sur les bords ou portions de bord crénelés 41, 412 (figure 16). Le blocage par des crans de crémaillère s'opposera suffisamment à toute contrainte due au poids ou à l'inertie de la charge tendant à repousser l'élément 4 en direction de l'ouverture supérieure de l'emballage 1, particulièrement lorsque l'emballage est soumis à des chocs, vibrations, chutes, inclinaisons ou retournements. L'arrêt a lieu lorsque la face interne inférieure 45 de l'élément de maintien est forcée contre le dessus de la charge CH. A ce stade, l'élément de maintien peut être sensiblement plat, ou fléchir sensiblement, la face externe 44 étant alors sensiblement concave. Cette concavité de la face externe de l'élément de maintien peut être due à une différence de niveau entre le centre du dessus de la charge, sensiblement concave, et les côtés plus élevés du dessus de la charge, ou bien à une différence de niveau entre la partie la plus élevée du dessus de la charge, sensiblement convexe, et des crans des crémaillères.
d) De préférence, le maintien de la charge CH par l'élément 4 est ensuite amélioré en exerçant des poussées PR réparties au moins sur les bordures de la face externe 44 de l'élément de maintien 4 longées par les bords ou portions de bords crénelés 41, 412, comme montré à la figure 17. Les poussées réparties PR appliquent ainsi les bordures de la face interne 45 de l'élément 4 contre le contour de dessus de la charge CH, ce qui parfait l'enrobage supérieur de la charge par l'élément de maintien, particulièrement lorsque le dessus de la charge est sensiblement convexe. Dans ces conditions, l'élément de maintien 4 peut être sensiblement gauche pour épouser sensiblement la forme du dessus de la charge et être bloqué par des crans des crémaillères situées respectivement à des niveaux différents. Toutefois, l'élément de maintien 4 est bloqué par les crans de crémaillère grâce à une profondeur suffisante E5 des entailles des crémaillères, et le cas échéant des cavités ou rainures dans les bords ou portions de bords de l'élément de maintien.

Il est à noter que les diverses opérations a) à d) peuvent être accomplies manuellement.

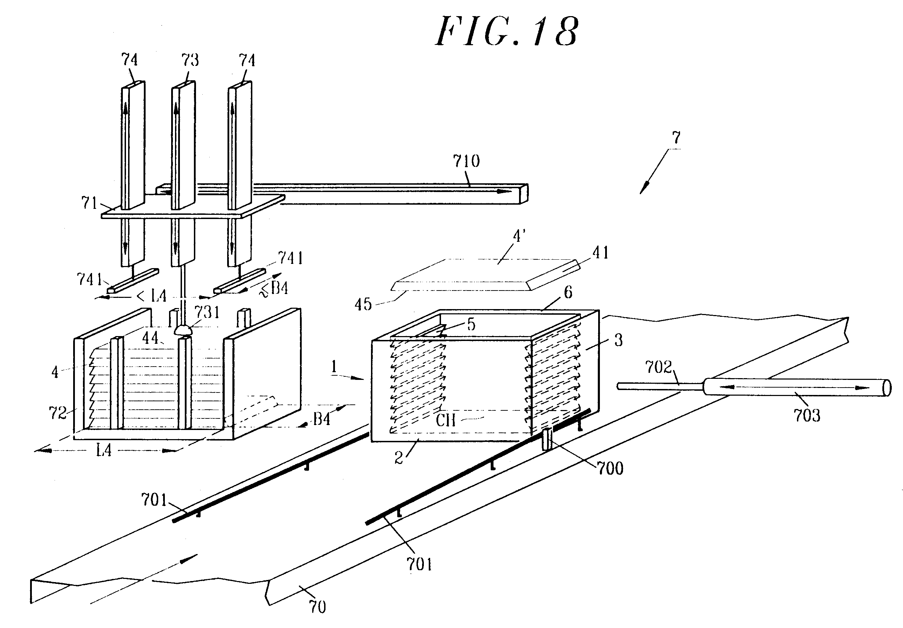

Un premier dispositif 7 pour conditionner une charge CH au moyen d'un emballage 1 selon l'invention, supposé par exemple du type bac ou caisse ouverte parallélépipèdique rectangle, est maintenant décrit en référence à la figure 18. Si l'emballage 1 comprend des rabats supérieurs, tels que 23sb et/ou 26sb (figure 4), attenant aux côtés 3 et/ou 6, les rabats sont largement écartés vers les faces externes des côtés, ou sont rabattus contre ces faces externes de côté et éventuellement maintenus à celles-ci par des points de colle ou rubans adhésifs.

L'emballage 1 a été préalablement formé dans une machine formeuse connue, ou bien a été récupéré d'une aire de stockage, et a été rempli par une charge quelconque CH. De tels emballages arrivent un à un sur un transporteur 70, par exemple de telle manière que les petits côtés 3 des emballages dotés de crémaillères 5 soient sensiblement parallèles à la direction d'avance du transporteur 70. Le parallélisme est obtenu au moyen de chicanes (non représentées) et de deux tiges de guidage longitudinales 701 convergeant vers le dispositif 7 avec un écartement égal à L1. Un moyen d'arrêt mobile est prévu pour arrêter l'emballage 1 à une position prédéterminée dans le dispositif 7, en réponse à la détection de l'emballage par une cellule photoélectrique 700 disposée latéralement au transporteur en entrée du dispositif 7. Ce positionnement d'emballage permet ultérieurement à un élément de maintien 4 d'être présenté précisément au-dessus de l'ouverture supérieure de l'emballage. le moyen d'arrêt peut être un butoir arrière transversal 702 mû par un vérin 703 latéral au transporteur, ou une butée escamotable de la surface porteuse du transporteur 70 lorsque celui-ci est un convoyeur à rouleaux ou à palettes qui est alors arrêté pendant la pose d'un élément de maintien.

Le dispositif 7 comprend essentiellement un équipage mobile 71 pour saisir et introduire un élément de maintien. L'équipage mobile est un cadre-porteur qui est translatable en va-et-vient, de préférence, perpendiculairement au transporteur 70, au moyen d'un long vérin 710 fixé à une potence ou un portique du dispositif. La translation de l'équipage 71 peut être guidée par une ou des glissières, ou un ou des rails. La course du vérin 710 est égale à la distance séparant les axes centraux, ici verticaux, d'un emballage 1 en position d'arrêt sur le transporteur 70 contre le butoir 702 et d'un magasin d'éléments de maintien 72. Le magasin a la forme d'une cuve parallélépipédique de dimensions internes sensiblement égales à L4 et B4 et contient une pile d'éléments de maintien 4. Selon une autre variante, le magasin 72 peut être remplacé par une zone d'arrêt analogue aux moyens 70, 700, 701, 702 et 703, vers laquelle sont transportés un à un des éléments de maintien provenant d'une machine de fabrication d'éléments de maintien ou d'une aire de stockage et de récupération d'éléments de maintien.

Au cadre-porteur de l'équipage mobile sont fixés un premier vérin 73 et au moins deux seconds vérins 74 dont les tiges sont propres à se déplacer perpendiculairement à la pile d'éléments de maintien 4 dans le magasin 72 et parallèlement au côté 3 de l'emballage 2 arrêté sur le transporteur 70. Les premiers et seconds vérins sont dotés respectivement de premier et second capteurs de pression de fin de course descendante réglés notamment en fonction des résistances propres aux charges à conditionner et à l'élément de maintien.

Comme montré à la figure 18, lorsque l'équipage mobile 71 est en bout de course au-dessus du magasin 72, l'axe du premier vérin 73 est centré sur l'axe central vertical du magasin, tandis que les vérins 74 sont alignés à la verticale du grand axe des éléments de maintien 4 empilés dans le magasin, avec un écart entre eux quelque peu inférieur à la longueur L4 des éléments 4. A l'extrémité inférieure de la tige du premier vérin 73 sont fixées plusieurs ventouses coniques déformables de préhension d'élément de maintien 731, dont une est représentée, reliées à des moyens de pression et de dépression pneumatiques. Les ventouses 731 sont régulièrement disposées au-dessus des zones centrales des longerons (ou traverses) de cadre 46f de la pile d'élément. Selon la réalisation illustrée à la figure 18 où seulement les petits côtés 3 comportent des crémaillères, des ventouses peuvent être alignées le long du petit axe d'un élément 4. Chacune des extrémités inférieures des tiges des seconds vérins 74 sont dotées de poussoirs 741. Un poussoir 741 peut être constitué par une barre ayant une longueur sensiblement inférieure à la largeur B4 des éléments de maintien 4, ou sensiblement égale à la zone des bords 41 destinée à coopérer avec les crans 51 des crémaillères. Les poussoirs 741 sont destinés à être descendus dans l'emballage 1, juste devant les crémaillères 5. Tant qu'un élément de maintien 4 transporté par l'équipage 71 n'a pas atteint le dessus de la charge CH dans l'emballage 1 en position d'arrêt, les poussoirs 741 sont stationnaires à un niveau au-dessus des ventouses 731, comme montré à la figure 18.

Le fonctionnement du dispositif 7 est le suivant. Avant la pénétration d'un emballage ouvert et chargé 1 dans le dispositif 7, l'équipage mobile 71 est situé en bout de course au-dessus du magasin 72 et les ventouses 731 reposent sur le premier élément de maintien 4 de la pile, tandis que les poussoirs 741 sont nettement au-dessus du magasin 72 et des emballages 1 sur le transporteur 70.

En réponse au passage du grand côté avant 6 de l'emballage 1 devant la cellule 700, le butoir 702 est déplacé devant l'emballage 1 par le vérin 703, et simultanément les ventouses 731 sont activées par effet de succion et le vérin 73 remonte le premier élément 4 au-dessus de la pile dans le magasin 72. Pendant cette ascension de l'élément saisi 4 et éventuellement au début de la translation de l'équipage 71, l'emballage 1 a été complètement arrêté par le butoir 702.

Le vérin 710 est ensuite activé pour déplacer l'équipage 71 avec l'élément de maintien 4 suspendu aux ventouses 731, comme montré en 4' dans la figure 14, du dessus du magasin 72 vers l'ouverture supérieure de l'emballage arrêté 1. En fin de course de l'équipage mobile 71 au-dessus du transporteur 70, le vérin 710 est désactivé et le vérin 73 est activé afin de commencer la descente de l'élément 4 à l'intérieur de l'emballage 1. La poussée P exercée par le vérin 73 est suffisamment élevée pour faire fléchir l'élément de maintien saisi 4 et ainsi vaincre les frottements dus aux passages des bords ou portions de bords crénelés 41, 412 de l'élément 4 sur les crans supérieurs 51 des crémaillères 5. Lorsque la tige du premier vérin 73 bute par l'intermédiaire de la zone centrale de l'élément 4 contre la charge CH, la pression exercée par le vérin atteint un premier seuil prédéterminé détecté par le premier capteur de pression et est alors maintenue à ce seuil. Les seconds vérins 74 sont alors actionnés pour descendre les poussoirs 741 en regard et à proximité des crémaillères 5 et des faces internes des côtés 3 et pour pousser sensiblement les bordures de l'élément 4, ou des traverses (ou longerons) de cadre de l'élément 4f, contre le contour supérieur de la charge CH, comme montré à la figure 17. Les poussées PR sont exercées par les vérins 74 jusqu'à ce que tous les capteurs de pression associés à ceux-ci aient détecté un second seuil de pression, supérieur au premier seuil, de manière à éventuellement gauchir l'élément 4 vers une forme convexe et vaincre la résistance de derniers crans de crémaillère 51 à franchir par les bords ou portions de bord crénelés 41, 412 de l'élément 4, ou de manière à distendre le moyen plat élastique 47f d'un élément 4f pour envelopper le dessus de la charge.

Puis, les ventouses 731 sont décompressées et donc détachée de l'élément 4, et les vérins 73 et 74 remontent les ventouses 731 et les poussoirs 741 pour les extraire de l'emballage 1. L'emballage 1 est ensuite libéré par la rétraction du butoir 702 sous l'action du vérin 703 et sort du dispositif 7 au moyen du transporteur 70, tandis que l'équipage mobile 71 revient au-dessus du magasin 72, en attente de l'introduction d'un autre élément de maintien dans le prochain emballage 1 sur le transporteur 70.

Selon d'autres variantes, les poussoirs 741 peuvent être descendus par les vérins 74, en même temps que les ventouses 731 et l'élément saisi 4 sont descendus par le vérin 73. Pendant cette descente, les poussoirs 74 demeurent en retrait vers le haut d'environ un demi-pas à un pas P5 des crémaillères par rapport à la ventouse 731, c'est-à-dire par rapport à la zone centrale de la face supérieure 44 de l'élément saisi 4. Ces conditions permettent d'éviter dans certains cas toute déformation et fléchissement irréversibles de l'élément 4, particulièrement du cadre 46f d'élément 4f, pendant son introduction dans l'emballage 1 (figure 15), en complétant l'effort de poussée P exercé sur l'axe central ici transversal, de l'élément 4 par le vérin 73.

Par ailleurs, l'équipage mobile 71 peut comporter autant de seconds vérins 74 avec poussoirs 741 que de côtés d'emballage 3 et/ou 6 dotés de crémaillères 5, ou autant de seconds vérins avec poussoirs que les côtés d'emballage. Pour certains conditionnements, l'ensemble des vérins 74 et des poussoirs 741 peut être remplacé par un unique vérin et un cadre-poussoir ayant un contour similaire à celui de l'intérieur de l'emballage ou du contour de l'élément de maintien, ou d'un cadre 46f d'élément 4f.

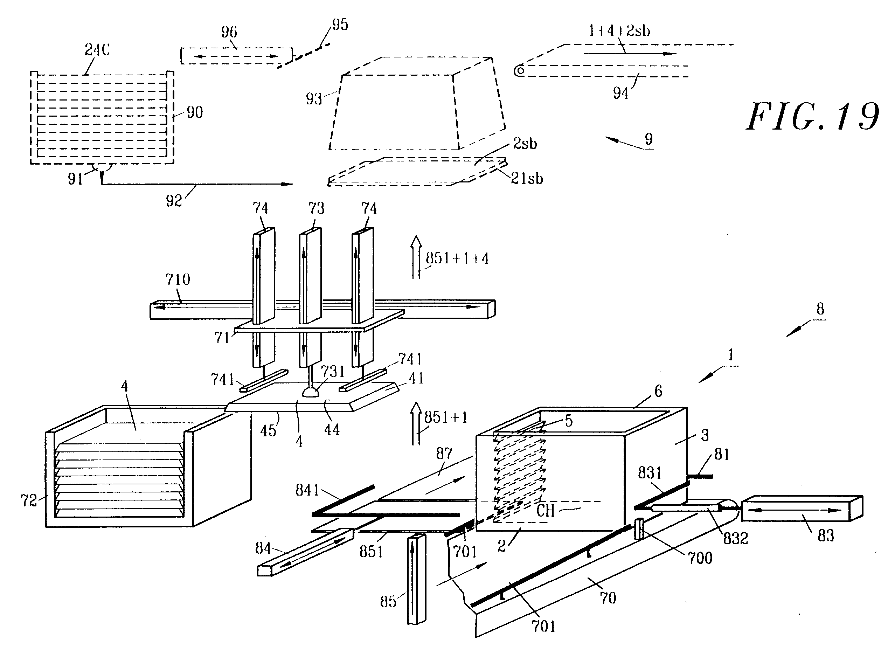

Selon une seconde réalisation, montrée à la figure 19, un dispositif 8 pour conditionner une charge CH au moyen d'un emballage 1 selon l'invention comprend des moyens du type monte-charge disposé latéralement à une extrémité aval du transporteur 70, pour déplacer l'emballage chargé en direction d'un élément de maintien maintenu immobile à une position prédéterminée, au lieu du moyen à vérin 73 pour introduire l'élément 4 dans l'emballage chargé immobile. Ce second dispositif de conditionnement 8 comprend un transporteur 70, un équipage mobile 71 à vérin 73 pour ventouses 731, dont une est représenteé, et à vérins 74 pour poussoirs 741, un vérin 710 translatant en va-et-vient l'équipage, et un magasin d'éléments de maintien 72, comme dans le dispositif 7 (figure 18).

Un emballage 1 est transporté par le transporteur 70 entre les deux tiges de guidage 701 convergeant vers l'extrémité aval du transporteur dans le dispositif 8. Le côté longitudinal avant 6 de l'emballage 1 bute contre une tige de guidage transversale fixe 81 devant l'extrémité du transporteur 70, cette tige 81 remplaçant le moyen d'arrêt mobile 702-703. Le dispositif 8 comprend un vérin transversal 83 et un vérin longitudinal 84, des poussoirs en regard 831 et 841 fixés aux tiges des vérins 83 et 84, un long vérin vertical 85 sous-jacent latéralement à la surface porteuse du transporteur 70, et un plateau élévateur d'emballage 851 fixé à la tige du vérin 85. Avant l'arrivée de l'emballage chargé 1, le poussoir 831 prolonge l'une des tiges de guidage 701 s'étendant sur le côté du transporteur 70 opposé au plateau-élévateur 851 et situé à droite du transporteur selon la réalisation illustrée. Comme cela apparaît dans la figure 19, le plateau 851 en position basse prolonge la zone d'extrémité aval du transporteur 70 transversalement vers la gauche par rapport à la direction d'avance du transporteur 70. Le plateau 851 se trouve à la verticale de l'équipage mobile 71 lorsque celui-ci est en fin de course de transport d'un élément de maintien saisi 4.

La présence de l'emballage dans la zone d'arrêt extrême du transporteur 70 est détectée par la cellule photoélectrique 700 qui initialise le processus automatique de pose d'élément 4 dans l'emballage 1. Puis après l'arrêt de l'emballage 1 par la tige 81, le vérin 83 pousse le poussoir 831 sur une longueur sensiblement supérieure à la longueur L1 de l'emballage 1 sur l'extrémité aval du transporteur 70, le vérin 84 ayant préalablement reculé le poussoir 841 pour dégager le dessus du plateau 85. L'emballage 1 ainsi poussé par le poussoir 831 glisse du transporteur au plateau 85, en étant guidé entre la tige de guidage avant 81 et le poussoir retiré 841 devant le plateau. Le poussoir 831 sert ensuite de guide vertical de l'emballage pendant son transfert vertical vers l'équipage mobile 71. Le côté arrière du poussoir 831 est prolongé à angle droit par une plaquette verticale 832 perpendiculaire au transporteur 70. La plaquette 832 retient le prochain emballage 1 en attente sur le transporteur 70 et permet d'introduire un à un les emballages dans la zone d'extrémité à l'avant du transporteur. Le poussoir 831 ne revient vers le côté à droite du transporteur 70 qu'à la fin du cycle de pose de l'élément 4.

Le vérin vertical 85 est activé pour élever le plateau 851 supportant l'emballage 1 avec la charge CH lorsqu'un élément de maintien saisi 4 est positionné au-dessus du plateau 851 par l'équipage 71 en arrêt de fin de course vers le transporteur 70. Le vérin 85 élève l'emballage 1 sur le plateau 851, de manière à encadrer l'élément saisi 4 par les côtés 3 et 6 de l'emballage, jusqu'à ce que le dessus de la charge CH vienne au contact de la face inférieure 45 de l'élément 4 et exerce une pression égale au premier seuil détecté par un capteur de pression du vérin 73 ou du vérin 85. La montée du plateau 851 est alors arrêtée afin que les poussoirs 741 poussent sous l'action des vérins 74 les bordures de l'élément 4 contre la charge, jusqu'à exercer la seconde pression, comme décrit précédemment.

Ensuite, les ventouses 731 relâchent l'élément 4, les vérins 73 et 74 remontent le cas échéant à leur position haute initiale les ventouses 731 et les poussoirs 741, et le vérin 85 descend le plateau 851 supportant l'emballage 1 avec la charge conditionnée jusqu'à atteindre le niveau du transporteur 70. Pendant que l'équipage mobile 71 retourne au-dessus du magasin 72, les vérins 83 et 84 sont actionnés en sens inverse du transfert précédent afin que le poussoir 841 pousse l'emballage 1 du plateau 85 vers l'extrémité amont d'un second transporteur 87 parallèle au transporteur 70, et le poussoir 831 avec sa plaquette 832 dégage l'extrémité aval du transporteur 70 pour la réception d'un autre emballage chargé.

Le dispositif de conditionnement 7 ou 8 peut être interposé soit dans une chaîne de conditionnement et d'expédition où les emballages 1 sont fabriqués ou formés préalablement, soit dans une chaîne de conditionnement et d'expédition où les emballages et les éléments de maintien sont récupérés et stockés. En aval du dispositif 7 ou 8, à l'extrémité aval du transporteur 70 dans la figure 18, ou 87 dans la figure 19, l'ouverture supérieure des emballages peut être ensuite fermée par un couvercle 2sb, 2se au moyen d'une machine analogue à la troisième machine de la chaîne de conditionnement décrite dans la EP-A-0151364 (SAVOYE Henry) en référence aux figures 12 et 13 de cette demande de brevet considérée comme contenue dans la présente description.

En variante, le dispositif 8 peut être combiné à ladite troisième machine de la EP-A-0151364, montrée schématiquement en 9 par des traits interrompus courts dans la figure 19. Selon cette variante, le vérin 84 et le transporteur 87 sont supprimés. Lorsque l'emballage 1 a reçu l'élément 4, celui-ci demeure immobile pendant que les vérins 73 et 74 dégagent les ventouses 731 et les poussoirs 741 de l'intérieur de l'emballage et le vérin 710 retire l'équipage mobile 71 du dessus de l'emballage, comme dans le dispositif 7. Au lieu de redescendre, le plateau 851 monte à nouveau, grâce au vérin 85, afin que l'emballage atteigne un plan intermédiaire où est maintenu en attente un flan de couvercle 24C, de préférence encollé, ou en variante un couvercle déjà formé, par exemple retiré par dessous d'un magasin 90 au moyen de ventouses 91 et d'un vérin-poussoir 92. Puis l'emballage coiffé par le flan de couvercle pénètre dans une matrice d'emboutissage de couvercle 93, et enfin ressort de la matrice avec le couvercle formé 2sb, 2sd sur et de préférence fixé à l'emballage au niveau d'un second transporteur d'emballage fermé 94, remplaçant le transporteur 87, en étant poussé par le poussoir 95 d'un vérin 96. Le plan intermédiaire de transport de flan de couvercle 24C à partir du magasin 90, la matrice d'emboutissage 93 et le second transporteur 94 des postes de formage de couvercle et fermeture d'emballage et sortie d'emballage dans ladite "troisième machine" sont ainsi situés au-dessus du vérin 710 et de l'équipage mobile 71, comme montré schématiquement à la figure 19.

En variante, grâce à des seconds moyens analogues à l'équipage mobile 71 dans le dispositif 7 montré à la figure 18, le couvercle 24C peut être saisi par ventouses dans un magasin de couvercles, être translaté au-dessus de l'emballage immobile 1 contenant l'élément de maintien 4, et être descendu pour coiffer l'ouverture supérieure de l'emballage.

Par ailleurs, il est à noter que le dispositif 7 ou 8 peut être inséré dans une chaîne de réception d'emballage. Dans ce cas, le dispositif 7 ou 8 sert à retirer l'élément de maintien 4 de chacun des emballages chargés reçus afin d'accéder à la charge, et la ventouse (ou les ventouses) 731 saisit l'élément de maintien pour le déposer dans un magasin de stockage 72 grâce aux vérins 710 et 73, selon un cycle inverse de ceux décrits précédemment. Les emballages sortant alors sur le transporteur 70 (figure 18) ou 87 (figure 19) sont ensuite déchargés.

## Revendications

1. Emballage comprenant un fond (2f) destiné à supporter une charge (CHf), au moins deux côtés (6f), des crémaillères (5f) solidaires des faces internes des côtés (6f), et un élément de maintien (4f) ayant des portions de bord (41f) qui coopèrent avec des crans (51f) des crémaillères et une face interne qui est destinée à être appliquée contre la charge (CH), caractérisé en ce que l'élément de maintien (4f) comprend un cadre (46f) dont des portions de bord ou des bords (41f) coopèrent avec des crans de crémaillère (5f), et un moyen plat élastique (47f) encadré par le cadre et assujetti au cadre.

2. Emballage conforme à la revendication 1, dans lequel le moyen élastique (47f) est une feuille ou toile élastique, ou bien un treillis ou filet élastique de fils, bandelettes ou fibres.

3. Emballage conforme à la revendication 1 ou 2, dans lequel le moyen élastique (47f) est assujetti au cadre (46f) par des bordures (471f) entretoisées dans le cadre.

4. Emballage conforme à l'une quelconque des revendications 1 à 3, dans lequel les portions de bord (41, 412) et les crémaillères (5) ont des profils sensiblement complémentaires.

5. Emballage conforme à l'une quelconque des revendications 1 à 4, dans lequel le profil d'au moins l'une des portions de bord (41, 412) et le profil d'au moins l'une des crémaillères (5) sont sensiblement triangulaires (41, 51 ; 41a, 51a), trapézoïdaux (41b, 51b), ronds (41c, 51c) ou rectangulaires (41e, 51e).

6. Emballage conforme à l'une quelconque des revendications 1 à 5, dans lequel la largeur d'au moins l'une des portions de bord (412b, 412c) est sensiblement égale à la largeur (B5) d'au moins l'une des crémaillères (5b, 5c).

7. Emballage conforme à l'une quelconque des revendications 1 à 6, dans lequel la largeur d'au moins l'une des portions de bords (41a, 41e) et/ou d'au moins l'une des crémaillères (5a, 5e) est sensiblement égale à la largeur (L4 ; B4) des côtés (6 ; 3).

8. Emballage conforme à l'une quelconque des revendications 1 à 7, dans lequel au moins l'un des côtés (6b ; 3c) comporte plusieurs crémaillères (5b' ; 5c) coopérant avec plusieurs portions de bord (412b ; 412c).

9. Emballage conforme à l'une quelconque des revendications 1 à 8, dans lequel au moins l'une des portions de bord (412c ; 412b) est en saillie ou dans une cavité le long d'un bord (41c ; 41b) de l'élément de maintien (4c ; 4b), et au moins l'une des crémaillères (5c ; 5b) est dans une cavité ou en saillie de la face interne (31c ; 31b) de l'un des côtés (3c ; 3c) de l'emballage (1c ; 1b).

10. Emballage conforme à l'une quelconque des revendications 1 à 9, dans lequel au moins l'une des portions de bord (412b) coopère avec plus d'un cran (51b) de l'une des crémaillères (5b).

11. Emballage conforme à l'une quelconque des revendications 1 à 10, dans lequel la hauteur (H5) d'au moins l'une des crémaillères (5c) est inférieure à la hauteur (H3) du côté (3c) auquel elle est solidaire, et de préférence s'étend sur une portion de la face interne (31c) dudit côté éloignée dudit fond (2c).

12. Emballage conforme à l'une quelconque des revendications 1 à 11, dans lequel la hauteur (H3) de l'un (3c) des côtés de l'emballage, de préférence auquel est solidaire au moins l'une (5c) des crémaillères, est supérieure à la hauteur (H6) d'un autre côté (6c) de l'emballage (1c).

13. Emballage conforme à l'une quelconque des revendications 1 à 12, dans lequel au moins l'une des crémaillères (5a, 5b ; 5c, 5d, 5e) est fixée à l'un des côtés (3a, 3b) de l'emballage (1a, 1b), ou est intégrée à l'un des côtés (3c, 6d, 3e) de l'emballage (1c, 1d, 1e) de préférence par moulage, emboutissage ou refoulage.

14. Emballage conforme à l'une quelconque des revendications 1 à 12, dans lequel au moins l'un (6d) des côtés est en carton ondulé ayant des cannelures (63d, 64d) sensiblement perpendiculaires au fond, au moins l'une des cannelures d'au moins la rangée de cannelures (63d) voisine de la face interne (66d, 61d) dudit côté possède des fentes (68d), des portions de la cannelure entre les fentes ou entre les fentes d'une paire de fente sur deux sont au moins partiellement aplaties pour former une denture (511d) de l'une des crémaillères (5d), et l'élément de maintien (4d) comprend au moins une partie saillante (412d) sur l'un de ses bords (41d) coopérant avec la crémaillère (5d) formée à partir de la cannelure.

15. Emballage conforme à l'une quelconque des revendications 1 à 14, dans lequel la face externe (44b ; 44c) de l'élément de maintien (4b ; 4c) comporte au moins une anse de préhension (42b ; 42c) de préférence rabattable sur, ou rabattable et encastrable dans ladite face externe (44b ; 44c).

16. Emballage conforme à l'une quelconque des revendications 1 à 15, dans lequel l'élément de maintien (4e) comporte au moins une lumière de préhension (43e) et/ou une fenêtre transparente (43e).

17. Emballage conforme à l'une quelconque des revendications 1 à 16, dans lequel au moins l'une des portions de bord (41, 412) et/ou au moins les crans (51) d'au moins l'une des crémaillères (5) sont enduits d'une matière sensiblement élastique ou sont caoutchoutés, ou sont en matière sensiblement élastique.

18. Emballage conforme à l'une quelconque des revendications 1 à 17, dans lequel l'élément de maintien (4) est au moins en partie en matière rigide ou semi-rigide, ou en matière élastique.

19. Emballage conforme à l'une quelconque des revendications 1 à 18, dans lequel la face interne (45c) de l'élément de mainten (4c) est recouverte par un matelas souple (47c) de préférence en mousse ou matière caoutchouteuse.

20. Emballage conforme à l'une quelconque des revendications 1 à 19 comprenant trois, quatre côtés ou plus (3c, 6c ; 3f, 6f ; 3e) dont au moins deux comportent chacun au moins une crémaillère (5c ; 5f ; 5e).

21. Emballage conforme à l'une quelconque des revendications 1 à 20, dans lequel le fond (2, 2c) comporte des encoches (27, 27c) complémentaires à des bords de côtés (3, 3c).

22. Emballage conforme à l'une quelconque des revendications 1 à 21 dans lequel le contour de l'élément de maintien (4) est sensiblement identique à celui de l'intérieur de l'emballage, de préférence l'élément de maintien ayant une épaisseur (E4) sensiblement uniforme et étant sensiblement rectangulaire, polygonal, ou circulaire.

23. Emballage conforme à l'une quelconque des revendications 1 à 22, dans lequel le fond (2c ; 2b) est monolithique avec les côtés (3, 3c, 5c) de l'emballage (1, 1c), ou est constitué par au moins un rabat (23b, 26b) attenant à l'un des côtés (3b, 6b) de l'emballage (1b).

24. Emballage conforme à l'une quelconque des revendications 1 à 23, dans lequel le fond (2e) est constitué par un couvercle ayant des rabats (21e) liés aux faces externes de côtés (3e) de l'emballage (1e) , et les côtés (3e) constituent un manchon.

25. Emballage conforme à l'une quelconque des revendications 1 à 24, comprenant un couvercle (2sb, 2se, 24C) ou des rabats (23sb et/ou 26sb) obturant l'ouverture de l'emballage en regard du fond (2b, 2e).

26. Procédé pour conditionner une charge (CH) supportée par le fond (2) de l'emballage conforme à l'une quelconque des revendications 1 à 25, caractérisé par :
a) saisie de l'élément de maintien (4f) de manière à le présenter au-dessus de l'ouverture de l'emballage (1f) opposée au fond (2f), avec des portions de bord (41f) sensiblement en prolongement des crémaillères (5f),
b) introduction de l'élément de maintien saisi (4f) à l'intérieur de l'emballage par poussée (P) exercée en direction de la charge (CH) sur des zones extrêmes d'un axe central du cadre d'élément de maintien (46f) afin que lesdites portions de bord (41f) franchissent successivement des crans (51f) des crémaillères, et
c) arrêt du déplacement de l'élément de maintien introduit (4f) et blocage de l'élément de maintien par rétention exercée par des crans (51f) des crémaillères (5) sur les portions de bord (41f) lorsque la face interne (45f) de l'élément de maintien est forcée contre la charge (CH).

27. Procédé conforme à la revendication 26, selon lequel, pendant ladite introduction, des poussées (PR) sont réparties au moins sur les bordures de la face externe (44) du cadre d'élément de maintien (46f) longées par les portions de bord (41f, 412) , de manière à maintenir la face externe (44) de l'élément de maintien avec une concavité sensiblement constante pendant ladite introduction.

28. Procédé conforme à la revendication 26 ou 27, selon lequel, après ledit arrêt, des poussées (PR) sont réparties au moins sur les bordures de la face externe (44) de l'élément de maintien longées par les portions de bord (41f, 412) en direction du contour de la charge (CHf).

29. Procédé conforme à l'une quelconque des revendications 26 à 29, comprenant l'obturation de ladite ouverture par un couvercle (2sb, 2se, 24C) après le blocage de l'élément de maintien (4f).

30. Dispositif pour conditionner une charge (CFf) supportée par le fond (2f) de l'emballage conforme à l'une quelconque des revendications 1 à 25, caractérisé en ce qu'il comprend :
- des moyens-supports (70 ; 851) supportant le fond (2f) de l'emballage;
- des moyens de préhension (73, 731) pour saisir l'élément de maintien (4f);
- des moyens de transport (71, 710) pour transporter les moyens de préhension (73, 731) au-dessus de l'ouverture de l'emballage (1f) opposée au fond (2f) afin que les portions de bord (41, 412) de l'élément de maintien soient sensiblement en prolongement des crémaillères (5f), et
- des moyens (73 ; 85) pour déplacer l'un des moyens de préhension et des moyens-supports vers l'autre de manière à introduire l'élément de maintien (4f), dans l'emballage et l'appliquer contre la charge (CH).

31. Dispositif conforme à la revendication 30, dans lequel les moyens de préhension comprennent plusieurs ventouses (731) pour saisir l'élément de maintien (4f).

32. Dispositif conforme à la revendication 30 ou 31, comprenant un magasin (72) contenant une pile d'éléments de maintien (4f), ou un transporteur d'élément de maintien, duquel est saisi l'élément de maintien par les moyens de préhension (731).

33. Dispositif conforme à l'une quelconque des revendications 30 à 32, dans lequel les moyens pour déplacer comprennent des moyens (73) transportables par les moyens de transport (71, 710) pour déplacer avec l'élément de maintien saisi (4f) les moyens de préhension (731) à l'intérieur de la charge jusqu'à la charge (CH) immobile avec l'emballage (1f).

34. Dispositif conforme à l'une quelconque des revendications 30 à 33, dans lequel les moyens-supports sont une zone d'un transporteur d'emballage (70) associée à des moyens (702, 703) pour arrêter momentanément l'emballage (1f) au moins pendant l'introduction de l'élément de maintien (4) dans l'emballage (1).

35. Dispositif conforme à l'une quelconque des revendications 30 à 33, dans lequel les moyens-supports sont un plateau (851) situé à côté d'un transporteur d'emballage (70) et associé à des moyens (83, 831) pour transférer l'emballage (1f) du transporteur vers le plateau avant l'introduction de l'élément de maintien (4f) dans l'emballage.

36. Dispositif conforme à l'une quelconque des revendications 30 à 33 et 35, dans lequel les moyens pour déplacer comprennent des premiers moyens (85) pour déplacer les moyens-supports (851) supportant le fond (2f) de l'emballage vers les moyens de préhension (73, 731) qui sont momentanément immobiles avec l'élément de maintien saisi (4f) jusqu'à ce que la charge (CH) soit appliquée contre la face interne (44) de l'élément de maintien.

37. Dispositif conforme à l'une quelconque des revendications 30 à 33, 35 et 36, comprenant des moyens (92) pour transporter un couvercle (24C) au-dessus de l'ouverture de l'emballage, et des seconds moyens (85) pour déplacer les moyens-supports (851) supportant l'emballage (1f) dans lequel a été appliqué l'élément de maintien (4f) contre la charge (CH), vers le couvercle transporté (24C), ou des seconds pour déplacer le couvercle transporté vers l'ouverture de l'emballage contenant l'élément de maintien appliqué contre la charge, afin d'obturer l'ouverture de l'emballage par le couvercle.

38. Dispositif conforme à la revendication 37 lorsqu'elle dépend de la revendication 32, dans lequel les seconds moyens (85) pour déplacer les moyens-supports supportant l'emballage sont confondus avec les premiers moyens pour déplacer.

39. Dispositif conforme à la revendication 38, comprenant des moyens (93) pour former le couvercle (24C, 2sb) sur l'ouverture de l'emballage (1f) pendant le déplacement de l'emballage contre le couvercle.

40. Dispositif conforme à l'une quelconque des revendications 33 à 36, comprenant des moyens (9) pour obturer l'ouverture de l'emballage par un couvercle (24C) après l'application de l'élément de maintien (4f) contre la charge (CHf).

## Claims

1. A package comprising a bottom (2f) for supporting a filling (CHf), at least two sides (6f), racks (5f) secured to the inner surfaces of the sides (6f), and a holding component (4f) having edge portions (41f) co-operating with notches (51f) on the racks and an inner surface for pressing against the filling (CH),
characterised in that the holding component (4f) has a frame (46f) comprising portions of an edge or edges (41f) co-operating with notches on the rack (5f), and a resilient flat means (47f) surrounded by the frame and secured to the frame.

2. A package according to claim 1, wherein the resilient means (7) is a resilient sheet or film or a resilient lattice or net of threads, strips or fibres.

3. A package according to claim 1 or 2, wherein the resilient means (47f) is secured to the frame (46f) by edges (471f) interlaced in the frame.

4. A package according to any of claims 1 to 3, wherein the edge portions (41, 412) and the racks (5) have substantially complementary profiles.

5. A package according to any of claims 1 to 4, wherein the profile of at least one of the edge portions (41, 412) and the profile of at least one of the racks (5) are substantially triangular (41, 51; 41a, 51a), trapezoidal (41b, 51b), round (41c, 51c) or rectangular (41e, 51e).

6. A package according to any of claims 1 to 5, wherein the width of at least one of the edge portions (412b, 412c) is substantially equal to the width (B5) of at least one of the racks (5b, 5c).

7. A package according to any of claims 1 to 6, wherein the width of at least one of the edge portions (41a, 41e) and/or at least one of the racks (5a, 5e) is substantially equal the width (L4; B4) of the sides (6; 3).

8. A package according to any of claims 1 to 7, wherein at least one of the sides (6b; 3c) comprises a number of racks (5b'; 5c) co-operating with a number of edge portions (412b; 412c).

9. A package according to any of claims 1 to 8, wherein at least one of the edge portions (412c; 412b) projects or is in a cavity along an edge (41c; 41b) of the holding component (4c; 4b), and at least one of the racks (5c; 5b) is in a cavity or projects from the inner surface (31c, 31b) of one of the sides (3c; 3c) of the package (1c; 1b).

10. A package according to any of claims 1 to 9, wherein at least one of the edge portions (412b) co-operates with more than one notch (51b) on one of the racks (5b).

11. A package according to any of claims 1 to 10, wherein the height (H5) of at least one of the racks (5c) is less than the height (H3) of the side (3c) to which it is secured, and preferably extends over a portion of the inner surface (31c) of the said side remote from the bottom (2c).

12. A package according to any of claims 1 to 11, wherein the height (H3) of one (3c) side of the package, preferably secured to at least one (5c) of the racks, is greater than the height (H6) of another side (6c) of the package (1c).

13. A package according to any of claims 1 to 12, wherein at least one of the racks (5a, 5b; 5c, 5d, 5e) is secured to one side (3a, 3b) of the package (1a, 1b) or is incorporated with one of the sides (3c, 6d, 3e) of the package (1c, 1d, 1e), preferably by moulding, pressing or grooving.

14. A package according to any of claims 1 to 12, wherein at least one (6d) of the sides is of corrugated cardboard formed with grooves (63d, 64d) substantially perpendicular to the base, at least one of the grooves in at least the row of grooves (63d) near the inner surface (66d, 61d) of the said side has slots (68d), portions of the groove between the slots or between alternate pairs of slots are at least partly flattened to form teeth (511d) on one of the racks (5d), and the holding component (4d) comprises at least one projecting part (412d) on one of its edges (41d) co-operating with the rack (5d) formed from the groove.

15. A package according to any of claims 1 to 14, wherein the outer surface (44b; 44c) of the holding component (4b; 4c) comprises at least one grip handle (42b; 42c) which preferably can be folded back on to or folded back and flush-mounted in the said outer surface (44b; 44c).

16. A package according to any of claims 1 to 15, wherein the holding component (4e) is formed with at least one grip hole (43e) and/or a transparent window (43e).

17. A package according to any of claims 1 to 16, wherein at least one of the edge portions (41, 412) and/or at least the notches (51) on at least one of the racks (5) are coated with a substantially resilient material or are rubber-coated or are of substantially resilient material.

18. A package according to any of claims 1 to 17, wherein the holding component (4) is at least partly of rigid or semi-rigid material or of resilient material.

19. A package according to any of claims 1 to 18, wherein the inner surface (45c) of the holding component (4c) is covered by a flexible pad (47c), preferably of foam or rubbery material.

20. A package according to any of claims 1 to 19, comprising three, four or more sides (3c, 4c; 3f, 6f; 3e), at least two of which each comprise at least one rack (5c; 5f; 5e).

21. A package according to any of claims 1 to 20, wherein the bottom (2, 2c) comprises notches (27, 27c) complementary with edges of the sides (3, 3c).

22. A package according to any of claims 1 to 21, wherein the contour of the holding component (4) is substantially identical with the contour of the interior of the package, the holding component preferably having a substantially uniform thickness (E4) and being substantially rectangular, polygonal or circular.

23. A package according to any of claims 1 to 22, wherein the bottom (2c, 2b) is monolithic with the sides (3, 3c, 5c) of the package (1, 1c) or comprises at least one flap (23b, 26b) adjoining one of the sides (3b, 6b) of the package (1b).

24. A package according to any of claims 1 to 23, wherein the bottom (2e) comprises a cover having flaps (21e) connected to the outer surfaces of the sides (3e) of the package (1e), and the sides (3e) form a sleeve.

25. A package according to any of claims 1 to 4, comprising a cover (2sb, 2se, 24C) or flaps (23sb and/or 26sb) blocking the package opening opposite the bottom (2b, 2e).

26. A method of packing a filling (CH) supported by the bottom (2) of the package according to any of claims 1 to 25, characterised by:
a) gripping the holding component (4f) so as to place it above the opening of the package (1f) opposite the bottom (2f), with edge portions (41f) substantially in line with the racks (5f),
b) insertion of the gripped holding component (4f) into the interior of the package by a thrust (P) exerted in the direction of the filling (CH) on outer zones of a central axis of the frame of the holding component (46f), so that the said portions of the edge (41f) successively cross notches (41f) on the racks, and
c) stoppage of the motion of the inserted holding component (4f) and securing the holding component by retention exerted by the notches (51f) of the racks (5) on the edge portions (41f) when the inner surface (45f) of the holding element is forced against the filling (CH).

27. A method according to claim 26 wherein, during the said insertion, thrusts (PR) are distributed at least over the edges of the outer surface (44) of the frame of the holding element (46f) skirted by the edge portions (41f, 412), so as to maintain a substantially constant concavity in the outer surface (44) of the holding component during the said insertion.

28. A method according to claim 26 or 27 wherein, after the said stoppage, thrusts (PR) are distributed at least over the edges of the outer surface (44) of the holding component skirted by the edge portions (41f, 412) in the direction of the contour of the filling (CHf).

29. A method according to any of claims 26 to 29, comprising blocking the said opening by a cover (2sb, 2se, 24C) after locking the holding component (4f).

30. A device for packing a filling (CHf) supported by the bottom (2f) of the package according to any of claims 1 to 25, characterised in that it comprises:
- supporting means (70; 851) supporting the bottom (2f) of the package;
- gripping means (73, 731) for gripping the holding component (4f);
- conveying means (71, 710) for conveying the gripping means (73, 731) above the opening of the package (1f) opposite the bottom (2f) so that the edge portions (41, 412) of the holding element are substantially in line with the racks (5f), and
- means (73, 85) for moving one of the gripping means and the supporting means towards the other so as to insert the holding component (4f) into the package and press it against the filling (CH).

31. A device according to claim 30, wherein the gripping means comprise a number of suckers (731) for gripping the holding component (4f).

32. A device according to claim 30 or 31, comprising a magazine (72) containing a stack of holding components (4f) or a conveyor of the holding element, the holding element being gripped by the gripping means (731).

33. A device according to any of claims 30 to 32, wherein the movement means comprise means (73) conveyable by the conveying means (71, 710) in order to move the gripping means (731), together with the gripped holding component (4f), inside the filling up to the filling (CH), which is stationary with the package (1f).

34. A device according to any of claims 30 to 33, wherein the supporting means are a zone of a package conveyor (70) associated with means (702, 703) for momentarily stopping the package (1f) at least during insertion of the holding component (4) into the package (1).

35. A device according to any of claims 30 to 33, wherein the supporting means are a tray or platform (851) situated at the side of a package conveyor (70) and associated with means (83, 831) for transferring the package (1f) from the conveyor to the tray or platform before insertion of the holding component (4f) in the package.

36. A device according to any of claims 30 to 33 and 35, wherein the movement means comprise first means (85) for moving the supporting means (851) supporting the bottom (2f) of the package towards the gripping means (73, 731), which are momentarily stationary with the gripped holding component (4f), until the filling (CH) is pressed against the inner surface (44) of the holding component.

37. A device according to any of claims 30 to 33, 35 and 36, comprising means (92) for conveying a cover (24C) above the opening of the package, and second means (85) for moving the supporting means (851) supporting the package (1f) in which the holding element (4f) has been pressed against the filling (CH), towards the conveyed cover (24C), or second means for moving the conveyed cover towards the opening of the package containing the holding component pressed against the filling, in order to block the opening of the package by means of the cover.

38. A device according to claim 37 when it depends on claim 32, wherein the second means (85) for moving the supporting means supporting the package are identical with the first movement means.

39. A device according to claim 38, comprising means (93) for forming the cover (24C, 2sb) on the opening of the package (1f) during movement of the package against the cover).

40. A device according to any of claims 33 to 36, comprising means (9) for blocking the opening of the package by a cover (24C) after pressing the holding component (4f) against the filling (CHf).

## Patentansprüche

1. Verpackung, umfassend einen zum Tragen einer Last (CHf) bestimmten Boden (2f), wenigstens zwei Seitenwände (6f), fest mit den Innenseiten der Seitenwände (6f) verbundene Zahnstangen (5f) und ein Haltelement (4f), das Randabschnitte (41f) aufweist, die mit Kerbungen (51f) der Zahnstangen zusammenwirken, und eine Innenseite, die dazu bestimmt ist, gegen die Last (CH) gedrückt zu werden, dadurch gekennzeichnet, daß das Halteelement (4f) einen Rahmen (46f), dessen Randabschnitte oder Ränder (41f) mit Zahnstangenkerbungen (5f) zusammenwirken, und ein flaches elastisches Mittel (47f) umfaßt, das durch den Rahmen umschlossen ist und an dem Rahmen fest befestigt ist.

2. Verpackung nach Anspruch 1, bei der das elastische Mittel (47f) eine Folie oder elastischer Stoff oder sogar ein Geflecht oder elastisches Netz von Fäden, Bändchen oder Fasern ist.

3. Verpackung nach Anspruch 1 oder 2, bei der das elastische Mittel (47f) durch im Rahmen verankerte Randbereiche (471f) mit dem Rahmen (46f) verbunden ist.

4. Verpackung nach einem beliebigen der Ansprüche 1 bis 3, bei der die Randabschnitte (41, 412) und die Zahnstangen (5) im wesentlichen komplementäre Profile aufweisen.

5. Verpackung nach einem beliebigen der Ansprüche 1 bis 4, bei der das Profil Wenigstens des einen der Randabschnitte (41, 412) und das Profil wenigstens der einen der Zahnstangen (5) im wesentlichen dreieckförmig (41, 51; 41a, 51a), trapezförmig (41b, 51b), rund (41c, 51c) oder rechteckförmig (41e, 51e) sind.

6. Verpackung nach einem beliebigen der Ansprüche 1 bis 5, bei der die Breite wenigstens des einen der Randabschnitte (412b, 412c) im wesentlichen gleich der Breite (B5) wenigstens der einen der Zahnstangen (5d, 5c) ist.

7. Verpackung nach einem beliebigen der Ansprüche 1 bis 6, bei der die Breite wenigstens des einen der Randabschnitte (41a, 41e) und/oder wenigstens der einen der Zahnstangen (5a, 5e) im wesentlichen gleich der Breite (L4; B4) der Seitenwände (6; 3) ist.

8. Verpackung nach einem beliebigen der Ansprüche 1 bis 7, bei der wenigstens die eine der Seitenwände (6b; 3c) mehrere Zahnstangen (5b'; 5c) umfaßt, die mit mehreren Randabschnitten (412b; 412c) zusammenwirken.

9. Verpackung nach einem beliebigen der Ansprüche 1 bis 8, bei der wenigstens der eine der Randabschnitte (412c; 412d) vorspringt oder sich in einem Hohlraum entlang eines Randes (41c; 41b) des Halteelements (4c; 4b) befindet und wenigstens die eine der Zahnstangen (5c; 5b) sich in einem Hohlraum befindet oder von der Innenseite (31c; 31b) der einen der Seitenwände (3c; 3c) der Verpackung (1c; 1b) vorspringt.

10. Verpackung nach einem beliebigen der Ansprüche 1 bis 9, bei der wenigsten der eine der Randabschnitte (412b) mit mehr als einer Einkerbung (51b) der einen der Zahnstangen (5b) zusammenwirkt.

11. Verpackung nach einem beliebigen der Ansprüche 1 bis 10, bei der die Höhe (H5) wenigstens der einen der Zahnstangen (5c) kleiner als die Höhe (H3) der Seitenwand (3c) ist, mit der sie fest verbunden ist, und sich vorzugsweise über einen Abschnitt der Innenseite (31c) der entfernten Seitenwand des Bodens (2c) erstreckt.

12. Verpackung nach einem beliebigen der Ansprüche 1 bis 11, bei der die Höhe (H3) der einen (3c) der Seitenwände der Verpackung, mit der vorzugsweise wenigstens die eine (5c) der Zahnstangen fest verbunden ist, größer als die Höhe (H6) einer anderen Seitenwand (6c) der Verpackung (1c) ist.

13. Verpackung nach einem beliebigen der Ansprüche 1 bis 12, bei der wenigstens die eine der Zahnstangen (5a, 5b; 5c, 5d, 5e) an der einen der Seitenwände (3a, 3b) der Verpackung (1a, 1b) befestigt ist oder mit der einen der Seitenwände (3c, 6d, 3e) der Verpackung (1c, 1d, 1e) vorzugsweise durch Formen, Ziehen oder Stauchen integriert ist.

14. Verpackung nach einem beliebigen der Ansprüche 1 bis 12, bei der wenigstens die eine (6d) der Seitenwände aus Wellpappe mit Riffelungen (63d, 64d) im wesentlichen senkrecht zum Boden ist, wenigstens die eine der Rillen wenigstens der Reihe von Rillen (63d) benachbart der Innenseite (66d, 61d) der Seitenwand Schlitze (68d) besitzt, Abschnitte der Riffelung zwischen den Schlitzen oder zwischen den Schlitzen eines Schlitzpaars von zweien wenigstens teilweise abgeflacht sind, um eine Zahnung (511d) der einen der Zahnstangen (5d) zu bilden, und das Halteelement (4d) wenigstens einen vorspringenden Teil (412d) auf einem ihrer Ränder (41d) umfaßt, der mit der ausgehend von der Riffelung gebildeten Zahnstange (5d) zusammenwirkt.

15. Verpackung nach einem beliebigen der Ansprüche 1 bis 14, bei der die Außenseite (44b; 44c) des Halteelements (4b; 4c) wenigstens einen Griffbügel (42b; 42c) umfaßt, der vorzugsweise auf die Außenseite (44b; 44c) umklappbar oder umklappbar und in dieser einfügbar ist.

16. Verpackung nach einem beliebigen der Ansprüche 1 bis 15, bei der das Halteelement (4e) wenigstens ein Griffloch (43e) und/oder ein transparentes Fenster (43e) umfaßt.

17. Verpackung nach einem beliebigen der Ansprüche 1 bis 16, bei der wenigstens der eine der Randabschnitte (41, 412) und/oder wenigstens die Einkerbungen (41) wenigstens der einen der Zahnstange (5) mit einem im wesentlichen elastischen Material überzogen sind oder gummiert sind oder aus einem im wesentlichen elastischen Material sind.

18. Verpackung nach einem beliebigen der Ansprüche 1 bis 17, bei der das Halteelement (4) wenigstens teilweise aus steifem oder halbsteifem Material oder aus elastischem Material ist.

19. Verpackung nach einem beliebigen der Ansprüche 1 bis 18, bei der die Innenseite (45c) des Halteelements (4c) von einem weichen Kissen (47c) vorzugsweise aus Schaumstoff oder gummiartigen Material überdeckt ist.

20. Verpackung nach einem beliebigen der Ansprüche 1 bis 19, umfassend drei, vier Seitenwände oder mehr, (3c, 6c; 3f, 6f; 3e), von denen wenigstens zwei jeweils wenigstens eine Zahnstange (5c; 5f; 5e) umfassen.

21. Verpackung nach einem beliebigen der Ansprüche 1 bis 20, bei der der Boden (2, 2c) zu Rändern von beiden Wänden (3, 3c) komplementäre Aussparungen (27, 27c) umfaßt.

22. Verpackung nach einem beliebigen der Ansprüche 1 bis 21, bei der die Kontur des Halteelements (4) im wesentlichen identische mit derjenigen des Inneren der Verpackung ist, wobei das Haltelement vorzugsweise eine im wesentlichen gleichmäßige Dicke (E4) aufweist und im wesentlichen rechteckförmig, polygon oder kreisförmig ist.

23. Verpackung nach einem beliebigen der Ansprüche 1 bis 22, bei der der Boden (2c; 2d) monolithisch mit den Seitenwänden (3, 3c, 5c) der Verpackung (1, 1c) ist oder aus wenigstens einer an die eine der Seitenwände (3b, 6b) der Verpackung (1b) angrenzenden Klappe (23b, 26b) besteht.

24. Verpackung nach einem beliebigen der Ansprüche 1 bis 23, bei der der Boden (2e) aus einem Deckel mit Klappen (21e) besteht, die mit den Außenseiten von Seitenwänden (3e) der Verpackung (1e) verbunden sind, und die Seitenwände (3e) eine Hülse bilden.

25. Verpackung nach einem beliebigen der Ansprüche 1 bis 24, aufweisend einen Deckel (2sb, 2se, 24C) oder Klappen (23sb und/oder 26sb), die die Öffnung der Verpackung gegenüber dem Boden (2d, 2e) verschließen.

26. Verfahren zur Verpackungsbehandlung einer Last (CH), die vom Boden (2) der Verpackung gemäß einem beliebigen der Ansprüche 1 bis 25 getragen wird, gekennzeichnet durch:
a) Erfassen des Halteelements (4f) derart, daß es oberhalb der Öffnung der Verpackung (1f) gegenüberliegend dem Boden (2f) mit Randabschnitten (41f) im wesentlichen in Verlängerung der Zahnstangen (5f) zur Verfügung gestellt wird,
b) Einführen des ergriffenen Halteelementes (4f) im Innenraum der Verpackung durch Stoßen (P), ausgeübt in Richtung der Last (CH) auf Außenbereichen einer zentralen Achse des Halteelementrahmens (46f), damit die Randabschnitte (41f) aufeinanderfolgend Einkerbungen (51f) der Zahnstangen überwinden, und
c) Anhalten der Verstellung des eingeführten Halteelements (4f) und Blockieren des Halteelements durch Zurückhalten, ausgeübt durch Einkerbungen (51f) der Zahnstangen (5) auf die Randabschnitte (41f), wenn die Innenseite (45f) des Halteelements gegen die Last (CH) gedrückt wird.

27. Verfahren nach Anspruch 26, gemäß dem während der Einführung Stöße (PR), auf wenigstens die Ränder der Außenseite (44) des Halteelementrahmens (46f) verteilt werden, die sich längs der Randabschnitte (41f, 412) erstrecken, derart, daß die Außenseite (44) des Halteelements mit einer im wesentlichen konstanten Konkavität während der Einführung gehalten wird.

28. Verfahren nach Anspruch 26 oder 27, gemäß dem nach dem Anhalten Stöße (PR) wenigstens auf die sich längs der Randabschnitte (41f, 412) erstreckenden Randbereiche der Außenseite (44) des Halteelements in Richtung der Kontur der Last (CHf) verteilt werden.

29. Verfahren nach einem beliebigen der Ansprüche 26 bis 28, umfassend das Verschließen der Öffnung durch einen Deckel (2sb, 2se, 24C) nach dem Blockieren des Halteelements (4f).

30. Vorrichtung zur Verpackungsbehandlung einer Last (CHf) die vom Boden (2f) der Verpackung gemäß einem beliebigen der Ansprüche 1 bis 25 getragen wird, dadurch gekennzeichnet, daß sie umfaßt:
- Tragmittel (70; 851), die den Boden (2f) der Verpackung tragen,
- Greifmittel (73, 731) zum Ergreifen des Halteelements (4f),
- Transportmittel (71, 710) zum Transportieren der Greifmittel (73, 731) oberhalb der Öffnung der Verpackung (1f) gegenüber dem Boden (2f), damit die Bodenabschnitte (41, 412) des Halteelements im wesentlichen in Verlängerung der Zahnstangen (5f) sind, und
- Mittel (73, 85) zum Verstellen des einen der Greifmittel und der Tragmittel zum anderen hin derart, daß das Halteelement (4f) in die Verpackung eingeführt wird und es gegen die Last (CH) beaufschlagt wird.

31. Vorrichtung nach Anspruch 30, bei der die Greifmittel mehrere Saugeinrichtungen (731) zum Ergreifen des Halteelements (4f) aufweisen.

32. Vorrichtung nach Anspruch 30 oder 31, aufweisend ein Magazin (72), das eine Ansammlung von Halteelementen (4f) enthält, oder einen Halteelementförderer, von dem das Halteelement mittels der Greifmittel (731) ergriffen wird.

33. Vorrichtung nach einem beliebigen der Ansprüche 30 bis 32, bei der die Mittel zum Verstellen durch die Transportmittel (71, 710) transportable Mittel (73) aufweisen, um mit dem ergriffenen Halteelement (4f) die Greifmittel (731) im Inneren der Last bis zu der mit der Verpackung (1f) unbeweglichen Last (CH) zu verstellen.

34. Vorrichtung nach einem beliebigen der Ansprüche 30 bis 33, bei der die Tragmittel ein Bereich eines Verpackungsförderers (70) sind, der Mitteln (702, 703) zum augenblicklichen Anhalten der Verpackung (1f) wenigstens während des Einführens des Halteelements (4) in die Verpackung (1) zugeordnet ist.

35. Vorrichtung nach einem beliebigen der Ansprüche 30 bis 33, bei der die Tragmittel eine Platte (851) sind, die sich Seite an Seite mit einem Verpackungsförderer (70) befindet, und Mitteln (83, 831) zum Überführen der Verpackung (1f) vom Transportmittel zur Platte vor dem Einführen des Halteelements (4f) in die Verpackung zugeordnet ist.

36. Vorrichtung nach einem beliebigen der Ansprüche 30 bis 33 und 35, bei der die Mittel zum Verstellen erste Mittel (85) zum Verstellen der Tragmittel (851), die den Boden (2f) der Verpackung tragen, zu den Greifmitteln (73, 731) hin aufweisen, die im Augenblick unbeweglich mit dem ergriffenen Halteelement (4f) sind, bis die Last (CH) gegen die Innenseite (44) des Halteelements beaufschlagt wird.

37. Vorrichtung nach einem beliebigen der Ansprüche 30 bis 33, 35 und 36, aufweisend Mittel (92) zum Transportieren eines Deckels (24C) oberhalb der Öffnung der Verpackung und zweite Mittel (85) zum Verstellen der Tragmittel (851), die die Verpackung (1f) tragen, in der das Halteelement (4f) gegen die Last (CH) beaufschlagt ist, zu dem transportierten Deckel (24C) hin, oder zweite zum Verstellen des transportierten Deckels zur Öffnung der Verpackung hin, die das gegen die Last beaufschlagte Halteelement enthält, um die Öffnung der Verpackung durch den Deckel zu verschließen.

38. Vorrichtung nach Anspruch 37, wenn abhängig vom Anspruch 32, bei der die zweiten Mittel (85) zum Verstellen der die Verpackung tragenden Tragmittel mit den ersten Mitteln zum Verstellen vereinigt sind.

39. Vorrichtung nach Anspruch 38, umfassend Mittel (93) zum Bilden des Deckels (24C, 2sb) auf der Öffnung der Verpackung (1f) während der Verstellung der Verpackung gegen den Deckel.

40. Vorrichtung nach einem beliebigen der Ansprüche 33 bis 36, aufweisend Mittel (9) zum Verschließen der Öffnung der Verpackung durch einen Deckel (24C) nach Beaufschlagen des Halteelements (4f) gegen die Last (CHf).
